# EUROPÄISCHE PATENTANMELDUNG

(11) **EP 4 678 329 A1**
(43) Veröffentlichungstag der Anmeldung: **14.01.2026**
(21) Anmeldenummer: 25188373.2
(22) Anmeldetag: 09.07.2025
(51) Int. Cl.: B23K 26/03, B23K 31/12

(54) **SENSORVORRICHTUNG ZUM ÜBERWACHEN EINES LASERBEARBEITUNGSPROZESSES UND LASERBEARBEITUNGSSYSTEM MIT SENSORVORRICHTUNG**

(30) Priorität: 10.07.2024 DE 102024119604
(71) Anmelder: Precitec GmbH & Co. KG, 76571 Gaggenau-Bad Rotenfels (DE)
(72) Erfinder: STREBEL, Matthias, 76571 Gaggenau (DE); KRAFT, Rainer, 76275 Ettlingen (DE); BOBROWSKI, Andreas, 77815 Bühl (DE); BURKART, Martin, 76571 Gaggenau (DE)
(74) Vertreter: Ter Meer Steinmeister & Partner

(57) **Zusammenfassung**

Die vorliegende Anmeldung offenbart eine Sensorvorrichtung zum Überwachen eines Laserbearbeitungsprozesses mittels eines Laserstrahls durch Erfassen einer Intensität eines während des Laserbearbeitungsprozesses entstehenden Prozessstrahls, die Sensorvorrichtung umfassend: einen optischen Eingang zum Einlassen des Prozessstrahls; eine Strahlteileranordnung eingerichtet, um aus dem Prozessstrahl mehrere sichtbare Teilstrahlen mit einem jeweiligen sichtbaren Wellenlängenbereich auszukoppeln; eine erste Photosensoren-Anordnung zum Erfassen der Intensität des Prozessstrahls im sichtbaren Wellenlängenbereich mit mehreren Photosensoren, die angeordnet sind, um jeweils eine Intensität von einem der sichtbaren Teilstrahlen zu erfassen, wobei die Strahlteileranordnung eingerichtet ist, einen ersten sichtbaren Teilstrahl mit einen ersten sichtbaren Wellenlängenbereich, einen zweiten sichtbaren Teilstrahl mit einem zweiten sichtbaren Wellenlängenbereich, einen dritten sichtbaren Teilstrahl mit einem dritten sichtbaren Wellenlängenbereich und einen vierten sichtbaren Teilstrahl mit einem vierten sichtbaren Wellenlängenbereich zu jeweils einem Photosensor der ersten Photosensoren-Anordnung auszukoppeln, und wobei die erste Photosensoren-Anordnung umfasst: einen ersten Photosensor, der angeordnet ist, um eine Intensität des ersten sichtbaren Teilstrahls zu erfassen, einen zweiten Photosensor, der angeordnet ist, um eine Intensität des zweiten sichtbaren Teilstrahls zu erfassen, einen dritten Photosensor, der angeordnet ist, um eine Intensität des dritten sichtbaren Teilstrahls (40a) zu erfassen und einen vierten Photosensor, der angeordnet ist, um eine Intensität des vierten sichtbaren Teilstrahls zu erfassen. Ferner ist ein Laserbearbeitungssystem mit der Sensorvorrichtung offenbart.

## Beschreibung

Die vorliegende Erfindung betrifft eine Sensorvorrichtung zum Überwachen eines Laserbearbeitungsprozesses und ein Laserbearbeitungssystem mit der Sensorvorrichtung.

### Technischer Hintergrund

In einem Laserbearbeitungssystem, auch als Laserbearbeitungsanlage bezeichnet, wird zur Bearbeitung eines Werkstücks der von einer Laserstrahlquelle oder einem Ende einer Laserleitfaser austretende Laserstrahl mit Hilfe von Strahlführungs- und Fokussieroptiken auf ein zu bearbeitendes Werkstück gerichtet und fokussiert. Die Bearbeitung kann ein Laserschwei-ßen oder ein Laserschneiden umfassen. Das Laserbearbeitungssystem kann einen Laserbearbeitungskopf, beispielsweise einen Laserschweißkopf oder einen Laserschneidkopf, umfassen, in dem die Optiken angeordnet sind. Der Laserbearbeitungsprozess kann einen Laserschweißprozess und einen Laserschneidprozess umfassen.

Um die Qualität der Bearbeitung zu sichern, ist es wichtig, den Laserbearbeitungsprozess kontinuierlich zu überwachen. Die Überwachung erfolgt typischerweise durch Erfassen und Auswerten von während des Laserbearbeitungsprozesses entstehenden optischen Prozessemissionen. Die optischen Prozessemissionen umfassen die von dem Werkstück zurückgestreute oder zurückreflektierte Laserstrahlung, entstehende Strahlung im infraroten Wellenlängenbereich des Lichts (sogenannter "Infrarot-Wellenlängenbereich"), z.B. Temperaturstrahlung eines Schmelzbads, und entstehende Strahlung im sichtbaren Wellenlängenbereich des Lichts, z.B. Strahlung eines bei der Bearbeitung entstehenden Plasmas. Die optischen Prozessemissionen können als Prozessstrahlung oder Prozessstrahl bezeichnet werden.

Das Erfassen des Prozessstrahls erfolgt typischerweise durch Photosensoren, beispielsweise Photodioden. Die Photosensoren können Teil einer Sensorvorrichtung sein, die am Laserbearbeitungskopf angeordnet ist. Der Prozessstrahl wird über den Laserbearbeitungskopf in die Sensorvorrichtung eingekoppelt. Die Photosensoren erfassen jeweils eine Intensität des Prozessstrahls in einem vorgegebenen Wellenlängenbereich und erzeugen ein entsprechendes Sensorsignal. Das Sensorsignal entspricht einer mittleren Intensität des jeweiligen Wellenlängenbereichs. Zum Auswerten und Überwachen werden die Sensorsignalverläufe beispielsweise mit jeweils vorgegebenen Hüllkurven und/oder Schwellwerten verglichen und es wird ein Fehler ausgegebenen, wenn ein Sensorsignal außerhalb der Hüllkurven liegt oder einen Schwellwert über- oder unterschreitet.

Bisher wird aufgrund der breitbandigen spektralen Empfindlichkeit der Photodioden die Gesamt-Intensität des Prozessstrahls in einem großen Wellenlängenbereich erfasst (sogenanntes integrales Sensorsignal bzw. integraler Sensorsignal-Wert) und zur Prozessüberwachung herangezogen.

### Zusammenfassung der Erfindung

Die Erfinder haben erkannt, dass eine solche integrierte Intensitätserfassung für eine präzise Überwachung von Laserbearbeitungsprozessen, insbesondere von Laserschweißprozessen, bei bestimmten Anwendungen nachteilig sein kann. Da das Sensorsignal der mittleren Intensität des Prozessstrahls in dem erfassten Wellenlängenbereich entspricht, sind im Sensorsignal bei bestimmten Prozessfehlern keine Veränderungen erkennbar, obwohl eine Veränderung der Intensität bei einzelnen Wellenlängen in dem Wellenlängenbereich vorliegt.

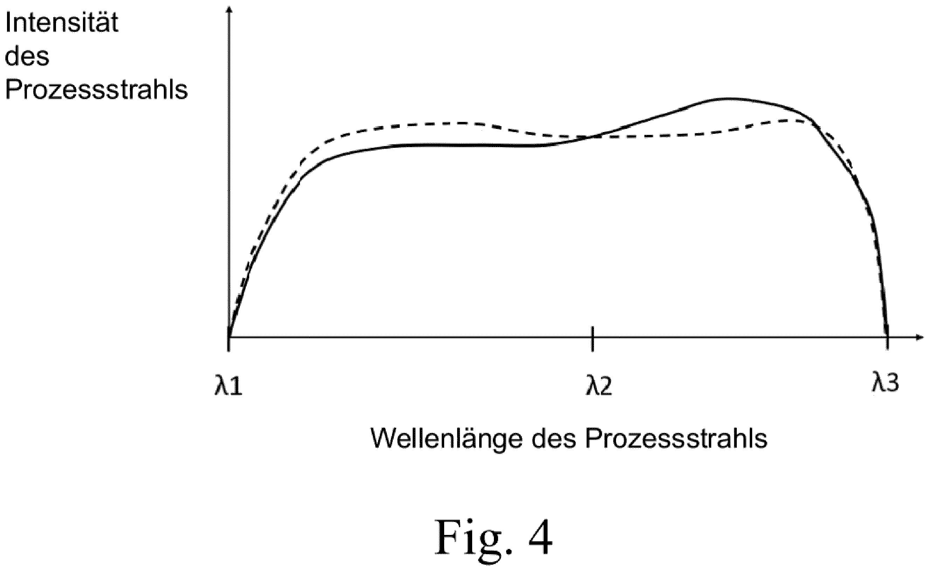

Dies wird anhand von Fig. 4 erläutert. Fig. 4 zeigt ein Diagramm zum Veranschaulichen einer Intensität des Prozessstrahls beim Laserschweißen in einem breitbandigen Wellenbereich (λ1 bis λ3). Die durchgezogene Linie zeigt die Intensität des Prozessstrahls in Abhängigkeit von der Wellenlänge λ zu einem Zeitpunkt, bei der ein Prozessfehler auftritt, während die gestrichelte Linie die Intensität für ein Laserschweißen ohne den Prozessfehler zeigt. Auf der linken Seite des Diagramms (Wellenlängenbereich λ1 bis λ2) ergibt sich durch den Prozessfehler eine Abnahme der Intensität gegenüber dem Fall ohne Prozessfehler, während sich auf der rechten Seite (Wellenlängenbereich λ2 bis λ3) eine Zunahme der Intensität gegenüber dem Fall ohne Prozessfehler ergibt. Wird aber nur ein Sensorsignal für die Intensität in dem großen bzw. breitbandigen Wellenlängenbereich zwischen λ1 und λ3 erfasst, kann eine Änderung innerhalb der einzelnen Teil-Wellenlängenbereiche λ1 bis λ2 und λ2 bis λ3 nicht erkannt werden. Folglich kann auch der Prozessfehler und ein fehlerhaft geschweißtes Werkstück als Ergebnis des Prozessfehlers nicht erkannt werden.

Ferner haben die Erfinder festgestellt, dass für eine präzise Überwachung von Laserbearbeitungsprozessen die optische Abbildung des Bearbeitungsbereichs um den Bearbeitungspunkt herum auf die einzelnen Photosensoren, z.B. Photodioden, einen weiteren entscheidenden Aspekt darstellt. Für spezielle Laserbearbeitungsprozesse kann es für jeden der überwachten Wellenlängenbereiche eine optimale Abbildung bzw. einen optimalen Abbildungsbereich geben. Insbesondere ist es von Vorteil, wenn für jeden überwachten Wellenlängenbereich bzw. für jeden aus dem Prozessstrahl ausgekoppelten Teilstrahl ein Bildausschnitt bzw. ein abgebildeter Bereich aus dem Bearbeitungsbereich individuell ausgewählt oder festgelegt werden kann.

Zum Beispiel gibt es eine optimale Abbildung für den Wellenlängenbereich zur Erfassung des Rückreflexes des Laserstrahls: Hier kann es von Vorteil sein, die Abbildung in etwa so groß zu machen, dass diese dem Auftreffpunkt des Laserstrahls auf dem Werkstück (d.h. dem Bearbeitungspunkt) entspricht. Beispielsweise kann eine Blendengröße bzw. die Größe der Sensorfläche auf die Abbildung des Auftreffpunkts des Laserstrahls auf dem Werkstück bzw. der Größe des Laserstrahl-Fokus begrenzt sein. Mit anderen Worten kann es von Vorteil sein, eine Blendengröße bzw. die Größe der Sensorfläche auf die Abbildung des Bearbeitungspunkts auszulegen. Dadurch kann beispielsweise sichergestellt werden, dass nur Prozessstrahlung aus einem bestimmten Bereich des Werkstücks (z.B. aus dem Keyhole und/oder Schmelzbad) für diesen Wellenlängenbereich ausgewertet wird. Für andere Wellenlängen bzw. Wellenlängenbereiche, beispielsweise dem Infrarot-Wellenlängenbereich, ist es eher von Vorteil, wenn die Abbildung bzw. der Abbildungsbereich deutlich größer ist als die Größe des Bearbeitungspunkts. Damit wird ein Erfassen von Effekten ermöglicht, die die Wärmeableitung weg vom Auftreffpunkt betreffen. Unterschiedliche Abbildungsbereiche bzw. eine optimale Auslegung der Abbildung erfordern aber wiederum unterschiedliche Blendengrößen bzw. die Größen der Sensorfläche für den jeweiligen Wellenlängenbereich.

Die Erfinder haben außerdem erkannt, dass für eine präzise Überwachung von Laserbearbeitungsprozessen, insbesondere von Laserschweißprozessen, in verschiedenen Wellenlängenbereiche eine unterschiedliche Verstärkung der Sensorsignale vorteilhaft ist. Beispielsweise weist das Sensorsignal des Laserrückreflexes in der Regel eine sehr hohe Intensität auf. Die Intensität des Prozessstrahls im Infrarot-Wellenlängenbereich hingegen ist im Vergleich dazu um Größenordnungen geringer.

Mit optischen Spektrometern ist eine solche Optimierung nicht oder nicht einfach umsetzbar. Hier wird der Prozessstrahl typischerweise mithilfe eines dispersiven Elements auf einen CMOS- oder CCD-Chip oder ein Diodenarray aufgespalten. Eine individuelle Einstellung der Abbildung ist nach dem dispersiven Element nicht mehr möglich. Hinter dem dispersiven Element lassen sich mit der Pixelgröße die erfassten Spektralbereiche einstellen, nicht aber deren Abbildung. Diese bleibt für alle Pixel im Allgemeinen gleich und ist definiert durch die Abbildung vor dem dispersiven Element. Eine individuelle Signalverstärkung wäre grundsätzlich bei einem Diodenarray wie bei einer Anordnung mit Einzeldioden möglich. Hier besteht aber das Problem des Übersprechens zwischen benachbarten Dioden des Diodenarrays.

Die Überwachung eines Laserbearbeitungsprozesses ist außerdem unvorteilhaft, wenn dafür nur die erfasste Intensität des Prozessstrahls in großen, breitbandigen Wellenlängenbereichen herangezogen wird. So können bestimme Effekte oder Fehler des Laserbearbeitungsprozesses nicht erkannt werden, weil die jeweils erfasste Intensität nur die mittlere Intensität in dem breitbandigen Wellenlängenbereich angibt. Außerdem wird die präzise Auslegung und Einstellung der Überwachung bei der Verwendung breitbandiger Wellenlängenbereiche erschwert oder verhindert.

Es ist daher eine Aufgabe der vorliegenden Erfindung, eine Sensorvorrichtung bereitzustellen, die eine verbesserte, insbesondere präzisere, Überwachung eines Laserbearbeitungsprozesses ermöglicht, und die eine verbesserte Erkennung von Prozessfehlern ermöglicht.

Es ist eine Aufgabe der vorliegenden Erfindung, eine Sensorvorrichtung bereitzustellen, die die Überwachung eines Laserbearbeitungsprozesses auf Basis von Intensitäten eines Prozessstrahls ermöglicht, die unabhängig voneinander bzw. getrennt voneinander für mehrere verschiedene Wellenlängenbereiche erfasst werden.

Es ist eine Aufgabe der vorliegenden Erfindung, eine Sensorvorrichtung bereitzustellen, die es ermöglicht, die Überwachung des Laserbearbeitungsprozesses für jeden der überwachten Wellenlängenbereiche des Prozessstrahls individuell auszulegen und/oder einzustellen.

Es ist eine Aufgabe der vorliegenden Erfindung, eine Sensorvorrichtung bereitzustellen, die eine individuell ausgelegte und/oder einstellbare Abbildung des Prozessstrahls für jeden der überwachten Wellenlängenbereiche ermöglicht.

Es ist eine Aufgabe der vorliegenden Erfindung, eine Sensorvorrichtung bereitzustellen, die es ermöglicht, eine Verstärkung von Sensorsignalen für jeden der überwachten Wellenlängenbereiche des Prozessstrahls individuell auszulegen und/oder einzustellen.

Es ist ebenfalls eine Aufgabe der Erfindung, ein Laserbearbeitungssystem mit einer solchen Sensorvorrichtung bereitzustellen.

Mindestens eine dieser Aufgaben wird durch den Gegenstand der unabhängigen Ansprüche gelöst. Vorteilhafte Ausführungsformen und Weiterbildungen sind Gegenstand abhängiger Ansprüche.

Gemäß einem Aspekt der vorliegenden Offenbarung ist eine Sensorvorrichtung zum Überwachen eines Laserbearbeitungsprozesses durch Erfassen einer Intensität eines während des Laserbearbeitungsprozesses entstehenden Prozessstrahls angegeben. Der Laserbearbeitungsprozess wird zum Bearbeiten eines Werkstücks, insbesondere eines metallischen Werkstücks, mittels eines Laserstrahls durchgeführt. Der Laserbearbeitungsprozess kann ein Laserschweißprozess sein.

Die Sensorvorrichtung umfasst: eine Strahlteileranordnung, die eingerichtet ist, um aus dem Prozessstrahl wenigstens zwei sichtbare Teilstrahlen jeweils mit einem von mindestens zwei verschiedenen sichtbaren Wellenlängenbereichen und wenigstens einen Infrarot-Teilstrahl mit einem Infrarot-Wellenlängenbereich auszukoppeln; eine erste Photosensoren-Anordnung zum Erfassen der Intensität des Prozessstrahls im sichtbaren Wellenlängenbereich mit mindestens zwei Photosensoren, die angeordnet sind, um eine Intensität von jeweils einem der sichtbaren Teilstrahlen zu erfassen; und eine zweite Photosensoren-Anordnung zum Erfassen der Intensität des Prozessstrahls im Infrarot-Wellenlängenbereich mit mindestens einem Photosensor, der angeordnet ist, um eine Intensität von dem Infrarot-Teilstrahl zu erfassen.

Gemäß einem weiteren Aspekt der vorliegenden Erfindung ist ein Laserbearbeitungssystem zum Durchführen eines Laserbearbeitungsprozesses angegeben. Das Laserbearbeitungssystem umfasst: einen Laserbearbeitungskopf, eingerichtet zum Einstrahlen eines Laserstrahls auf ein Werkstück zum Durchführen des Laserbearbeitungsprozesses, und eine Sensorvorrichtung gemäß Aspekten und Ausführungsformen der vorliegenden Offenbarung.

Der Laserbearbeitungskopf kann mindestens einen Strahlteiler aufweisen. Der Strahlteiler kann angeordnet sein, um einen während des Laserbearbeitungsprozesses entstehenden Prozessstrahl aus dem Strahlengang des Laserstrahls auszukoppeln und/oder um den Prozessstrahl in die Sensorvorrichtung einzukoppeln.

Gemäß einem weiteren Aspekt der vorliegenden Offenbarung ist eine Sensorvorrichtung zum Überwachen eines Laserbearbeitungsprozesses durch Erfassen einer Intensität eines während des Laserbearbeitungsprozesses entstehenden Prozessstrahls angegeben. Die Sensorvorrichtung umfasst eine Strahlteileranordnung eingerichtet, um aus dem Prozessstrahl mehrere sichtbare Teilstrahlen mit einem jeweiligen sichtbaren Wellenlängenbereich auszukoppeln; eine erste Photosensoren-Anordnung zum Erfassen der Intensität des Prozessstrahls im sichtbaren Wellenlängenbereich mit mehreren Photosensoren, die angeordnet sind, um jeweils eine Intensität von einem der sichtbaren Teilstrahlen zu erfassen, wobei die Strahlteileranordnung eingerichtet ist, einen ersten sichtbaren Teilstrahl mit einen ersten sichtbaren Wellenlängenbereich, einen zweiten sichtbaren Teilstrahl mit einem zweiten sichtbaren Wellenlängenbereich, einen dritten sichtbaren Teilstrahl mit einem dritten sichtbaren Wellenlängenbereich und einen vierten sichtbaren Teilstrahl mit einem vierten sichtbaren Wellenlängenbereich zu jeweils einem Photosensor der ersten Photosensoren-Anordnung auszukoppeln, und wobei die erste Photosensoren-Anordnung umfasst: einen ersten Photosensor, der angeordnet ist, um eine Intensität des ersten sichtbaren Teilstrahls zu erfassen, einen zweiten Photosensor, der angeordnet ist, um eine Intensität des zweiten sichtbaren Teilstrahls zu erfassen, einen dritten Photosensor, der angeordnet ist, um eine Intensität des dritten sichtbaren Teilstrahls zu erfassen und einen vierten Photosensor, der angeordnet ist, um eine Intensität des vierten sichtbaren Teilstrahls zu erfassen.

Im Rahmen dieser Offenbarung bezeichnet ein "überwachter Wellenlängenbereich" einen Wellenlängenbereich des Prozessstrahls, der durch einen Photosensor der Vorrichtung zur Überwachung des Laserbearbeitungsprozesses erfasst wird. Insbesondere wird die Intensität des Prozessstrahls in diesem Wellenlängenbereich erfasst und ein entsprechendes Sensorsignal erzeugt. Das Sensorsignal kann anschließend ausgewertet und/oder aufgezeichnet werden. Mit "sichtbarer Wellenlängenbereich" wird ein Wellenlängenbereich bezeichnet, der überwiegend Wellenlängen im sichtbaren Spektrum des Lichts aufweist. Insbesondere kann der sichtbare Wellenlängenbereich ein Wellenlängenbereich zwischen 350 nm und 850 nm oder zwischen 390 nm und 850 nm oder zwischen 380 nm und 800 nm sein oder diesen umfassen. Mit "Infrarot-Wellenlängenbereich" wird insbesondere ein Wellenlängenbereich bezeichnet, der überwiegend Wellenlängen im infraroten Spektralbereich aufweist. Der Wellenlängenbereich ist aber nicht auf Wellenlängen im infraroten Spektralbereich beschränkt, da Temperaturstrahlung, d.h. thermische Emission von Licht, auch in anderen Spektralbereichen, z.B. dem ultravioletten und sichtbaren, auftreten kann. Insbesondere kann der Infrarot-Wellenlängenbereich ein Wellenlängenbereich zwischen 1200 nm und 2100 nm sein oder diesen umfassen. Ferner wird mit "sichtbarer Teilstrahl" ein Teilstrahl im sichtbaren Wellenlängenbereich, mit "Infrarot-Teilstrahl" ein Teilstrahl im Infrarot-Wellenlängenbereich und mit "Rückreflex-Teilstrahl" ein Teilstrahl im Rückreflex-Wellenlängenbereich bezeichnet. Mit "nicht überlappenden" Wellenbereichen ist gemeint, dass keine Wellenlänge des einen Wellenlängenbereichs im jeweils anderen Wellenlängenbereich enthalten ist. "nicht überlappend" ist synonym zu "vollständig voneinander verschieden". Mit "Auskoppeln eines Teilstrahls" durch eine Strahlteileranordnung ist gemeint, dass der Prozessstrahl durch die Strahlteileranordnung mindestens einmal in zwei Teilstrahlen, nämlich in diesen Teilstrahl und einen weiteren Teilstrahl aufgeteilt wird. Der ausgekoppelte Teilstrahl kann von der Strahlteileranordnung mindestens einmal reflektiert und/oder mindestens einmal transmittiert worden sein. Dazu kann die Strahlteileranordnung mindestens einen Strahlteiler aufweisen. Die Aufteilung in zwei Teilstrahlen ist nicht darauf beschränkt, dass zwischen einem Strahlteiler und dem einfallenden Strahl (Prozessstrahl oder ein Teilstrahl des Prozessstrahls) 45° bestehen, vielmehr sind beliebige Winkel möglich. Die Aufteilung in zwei Teilstrahlen kann mit einem neutralen und/oder nicht-selektiven Strahlteiler erfolgen (z.B. in einem Verhältnis zu 50:50 oder 90:10), oder selektiv anhand einer Lichteigenschaft (z.B. anhand der Wellenlänge und/oder der Polarisation). Ein einen Strahlteiler "passierter" Teilstrahl umfasst, dass ein Teil eines Strahls (der Prozessstrahl oder ein Teilstrahl des Prozessstrahls) als dieser Teilstrahl vom Strahlteiler reflektiert wird oder als dieser Teilstrahl vom Strahlteiler durchgelassen wird.

Die Strahlteileranordnung kann mehrere Strahlteiler umfassen. Auf dem Weg vom Eintritt in die Sensorvorrichtung bis zu den Photosensoren wechselwirkt das Licht des Prozessstrahls mit den Strahlteilern. Ein primärer Strahlteiler kann definiert sein als der erste Strahlteiler im Strahlengang des Prozessstrahls nach Eintritt in die Sensorvorrichtung. Dabei wird der Prozessstrahl aufgeteilt in (genau) zwei Teilstrahlen, einen reflektierten Teilstrahl und einen durchgelassenen Teilstrahl. Die Strahlteiler im Strahlengang dieser Teilstrahlen werden als sekundäre Strahlteiler bezeichnet, usw. Mit jeder weiteren Interaktion (Reflektion/Transmission) eines der Teilstrahlen mit einem weiteren Strahlteiler der Strahlteileranordnung erhöht sich die Ordnung des jeweiligen Strahlteilers (Strahlteilerordnung): tertiär, quartär, quintär, sextär, septimär usw. In einer Strahlteileranordnung kann es also (maximal) einen primären Strahlteiler, zwei sekundäre Strahlteiler, vier tertiäre Strahlteiler, acht quartäre Strahlteiler, 16 quintäre Strahlteiler usw. geben. Umgekehrt meint die "primäre Strahlteilerordnung" den primären Strahlteiler der Strahlteileranordnung, die "sekundäre Strahlteilerordnung" die sekundären Strahlteiler der Strahlteileranordnung, usw. Der primäre Strahlteiler kann ein Strahlteiler erster Strahlteilerordnung sein. Der sekundäre Strahlteiler kann ein Strahlteiler zweiter Strahlteilerordnung sein. Der tertiäre Strahlteiler kann ein Strahlteiler dritter Strahlteilerordnung sein. Der quartäre Strahlteiler kann ein Strahlteiler vierter Strahlteilerordnung sein. Der quitäre Strahlteiler kann ein Strahlteiler fünfter Strahlteilerordnung sein. Der sextäre Strahlteiler kann ein Strahlteiler sechster Strahlteilerordnung sein.

Mit anderen Worten kann die Strahlteilerordnung angeben, wie viele (aneinandergereihte) optische Wechselwirkungen ein Teilstrahl in der Strahlteileranrodnung höchstens mit den entsprechenden Strahlteilern ausführt. Die optische Wechselwirkung kann eine Transmission des Lichts des Prozessstrahls durch den entsprechenden Strahlteiler und/oder eine Reflektion des Lichts des Prozessstrahls an dem entsprechenden Strahlteiler umfassen. Die Begriffe Strahlteilerordnung und Ordnung des Strahlteilers können synonym sein.

Die vorliegende Erfindung basiert auf der Idee, den Wellenlängenbereich des Prozessstrahls, insbesondere den sichtbaren Wellenlängenbereich, in kleinere, schmalbandige Wellenlängenbereiche aufzuteilen und die Intensität des Prozessstrahls für jeden der schmalbandigen Wellenlängenbereiche individuell zu erfassen. Dazu sieht die Erfindung eine Strahlteileranordnung vor, mit deren Hilfe aus dem Prozessstrahl ein entsprechender Teilstrahl für jeden der schmalbandigen Wellenlängenbereiche auskoppelt wird und auf einen entsprechen Photosensor gelenkt bzw. gerichtet wird. Die Intensität jedes Teilstrahls wird von dem entsprechenden Photosensor erfasst, der ein der erfassten Intensität entsprechendes Sensorsignal ausgeben kann.

Die vorliegende Erfindung kann die Überwachung des Laserbearbeitungsprozesses basierend auf drei oder mehr, vorzugsweise vier, besonders bevorzugt mindestens sieben, Wellenlängenbereichen ermöglichen, und insbesondere basierend auf mindestens zwei, vorzugweise drei, besonders bevorzugt vier, sichtbaren Wellenlängenbereichen. Dies erlaubt eine präzisere Überwachung des Laserbearbeitungsprozesses, weil bestimmte Prozessfehler überhaupt oder besser erkannt werden können.

Außerdem kann ein Erfassen und/oder Verarbeiten und/oder Auswerten eines jeden Wellenlängenbereichs getrennt von den anderen und damit individuell erfolgen. Die Sensorsignale der verschiedenen Wellenlängenbereiche können beispielsweise getrennt und/oder unterschiedlich voneinander verstärkt werden. Damit kann jedes erzeugte Sensorsignal einer individuellen Verstärkung unterzogen werden. Die individuelle Verstärkung ist deshalb wichtig, weil die Intensitäten der Teilstrahlen häufig um mehrere Größenordnungen variieren. Beispielsweise weist üblicherweise der Laserrückreflex eine sehr hohe Intensität auf, während die Intensität der infraroten Strahlung im Vergleich dazu meist um Größenordnungen geringer ist. Die vorliegende Erfindung erlaubt eine individuelle Verstärkung der Sensorsignale der unterschiedlichen Wellenlängenbereiche in einem weiten Größenordnungsbereich, beispielsweise um den Faktor 10 bis 10⁷.

In einem weiteren Beispiel kann die optische Abbildung für jeden Teilstrahl bzw. für jeden Wellenlängenbereich individuell ausgelegt und eingestellt werden. Dazu kann die Strahlteileranordnung eingerichtet sein, um jeden der mehreren Teilstrahlen mit einer vorgegebenen optischen Abbildung und/oder einer individuell einstellbaren optischen Abbildung zum entsprechenden Photosensor auszukoppeln. Die Strahlteileranordnung kann eine Abbildungseinrichtung aufweisen. Die Abbildungseinrichtung kann eine Blende für jede Teilstrahl aufweisen. Die Blendenöffnung jeder der Blenden kann individuell einstellbar sein. Die Blenden können inverse Blenden sein. Die Blenden können zur optomechanischen Strahlführung und/oder -Blockung eingerichtet sein. Ferner kann die Abbildungseinrichtung für jeden Teilstrahl mindestens ein optisches Element, beispielsweise eine Linse oder ein Linsensystem zur Einstellung der Abbildung des Teilstrahls auf die Sensorfläche des entsprechenden Photosensors aufweisen. Die Strahlteileranordnung kann somit zur räumlichen optischen Filterung, Strahlführung bzw. Strahlblockung verwendet werden.

Alternativ oder zusätzlich kann für jeden Teilstrahl bzw. Wellenlängenbereich eine Größe der Sensorfläche des entsprechenden Photosensors und/oder Position der Sensorfläche entlang der Strahlachse unabhängig und/oder unterschiedlich von anderen Teilstrahlen bzw. Wellenlängenbereichen gewählt sein oder einstellbar sein. Somit kann ein Ausschnitt des Prozessbereichs, aus dem Intensität des Teilstrahls bzw. des überwachten Wellenlängenbereichs erfasst wird individuell eingestellt werden.

Die Abbildungen der einzelnen Wellenlängenbereiche können dadurch räumlich optimiert eingestellt werden. Die einzelnen Wellenlängenbereiche können sozusagen räumlich gefiltert werden. Für jeden Teilstrahl bzw. jeden überwachten Wellenlängenbereich kann eine optimierte Abbildung auf den entsprechenden Photosensor gewählt bzw. eingestellt werden. Die Aspekte der vorliegenden Offenbarung können ein oder mehrere der folgenden optionalen Merkmale aufweisen.

Die Sensorvorrichtung kann einen optischen Eingang zum Einlassen des Prozessstrahls aufweisen.

Die Strahlteileranordnung kann eingerichtet sein, aus dem Prozessstrahl eine Vielzahl von Teilstrahlen mit jeweils voneinander verschiedenen Wellenlängenbereichen auszukoppeln. Hierbei können die Wellenlängenbereiche der durch die Strahlteileranordnung ausgekoppelten Teilstrahlen vollständig voneinander verschieden sein, d.h. einander nicht überlappen. Die Wellenlängenbereiche der durch die Strahlteileranordnung ausgekoppelten Teilstrahlen können zwischen 50 nm und 200 nm oder zwischen 50 und 100 nm breit sein.

Die Strahlteileranordnung kann eingerichtet sein, einen Rückreflex-Teilstrahl mit dem Rückreflex-Wellenlängenbereich aus dem Prozessstrahl auszukoppeln.

Die Sensorvorrichtung kann eine dritte Photosensoren-Anordnung zum Erfassen der Intensität des Prozessstrahls im Rückreflex-Wellenlängenbereich umfassen. Die dritte Photosensoren-Anordnung kann einen Photosensor aufweisen, der angeordnet ist, um eine Intensität des Rückreflex-Teilstrahls zu erfassen.

Der Rückreflex-Wellenlängenbereich kann die Wellenlänge des Laserstrahls und/oder einen Wellenlängenbereich von 950 nm bis 1150 nm, vorzugsweise von 1000 nm bis 1100 nm umfassen oder einen Wellenlängenbereich im grünen Spektralbereich oder im blauen Spektralbereich umfassen. Die Strahlteileranordnung kann eingerichtet sein, um den Rückreflex-Teilstrahl zum Photosensor der dritten Photosensoren-Anordnung zu führen. Der Laserstrahl kann eine Wellenlänge im infraroten oder sichtbaren, insbesondere grünen oder blauen, Spektralbereich aufweisen.

Der sichtbare Wellenlängenbereich und der Infrarot-Wellenlängenbereich bzw. der sichtbare Wellenlängenbereich, der Infrarot-Wellenlängenbereich und der Rückreflex-Wellenlängenbereich können vollständig voneinander verschieden sein, d.h. einander nicht überlappen.

Die erste Photosensoren-Anordnung kann mehrere Photosensoren zum Erfassen der Intensität des Prozessstrahls im sichtbaren Wellenlängenbereich aufweisen. Die erste Photosensoren-Anordnung kann für jeden durch die Strahlteileranordnung aus dem Prozessstrahl ausgekoppelten sichtbaren Teilstrahl einen Photosensor aufweisen, um die Intensitäten der mehreren sichtbaren Teilstrahlen getrennt voneinander zu erfassen.

Die zweite Photosensoren-Anordnung kann mehrere Photosensoren zum Erfassen der Intensität des Prozessstrahls im Infrarot-Wellenlängenbereich aufweisen. Die zweite Photosensoren-Anordnung kann für jeden durch die Strahlteileranordnung aus dem Prozessstrahl ausgekoppelten Infrarot-Teilstrahl einen Photosensor aufweisen, um die Intensitäten der mehreren Temperatur- Teilstrahlen getrennt voneinander zu erfassen.

Die Strahlteileranordnung kann eingerichtet sein, einen ersten sichtbaren Teilstrahl mit einem ersten sichtbaren Wellenlängenbereich und einen zweiten sichtbaren Teilstrahl mit einem zweiten sichtbaren Wellenlängenbereich zu jeweils einem Photosensor der ersten Photosensoren-Anordnung auszukoppeln. Die Strahlteileranordnung kann ferner eingerichtet sein, einen dritten sichtbaren Teilstrahl mit einem dritten sichtbaren Wellenlängenbereich zu einem dritten Photosensor der ersten Photosensoren-Anordnung auszukoppeln. Die Strahlteileranordnung kann ferner eingerichtet sein, einen vierten sichtbaren Teilstrahl mit einem vierten sichtbaren Wellenlängenbereich zu einem vierten Photosensor der ersten Photosensoren-Anordnung auszukoppeln.

Die erste Photosensoren-Anordnung kann einen ersten Photosensor, der angeordnet ist, um eine Intensität des ersten sichtbaren Teilstrahls zu erfassen, und einen zweiten Photosensor, der angeordnet ist, um eine Intensität des zweiten sichtbaren Teilstrahls zu erfassen, umfassen. Die erste Photosensoren-Anordnung kann ferner einen dritten Photosensor, der angeordnet ist, um eine Intensität des dritten sichtbaren Teilstrahls zu erfassen, umfassen. Die erste Photosensoren-Anordnung kann ferner einen vierten Photosensor, der angeordnet ist, um eine Intensität des vierten sichtbaren Teilstrahls zu erfassen, umfassen.

Einer der sichtbaren Wellenlängenbereiche kann in mindestens einem anderen sichtbaren Wellenlängenbereich vollständig enthalten sein. Die sichtbaren Wellenlängenbereiche können gleich sein. Die sichtbaren Wellenlängenbereiche können verschieden auf die entsprechenden Photosensoren abgebildet sein.

Die mehreren sichtbaren Wellenlängenbereiche können verschieden voneinander sein und/oder können einander nicht überlappen. Falls vorhanden, können die ersten, zweiten, dritten und/oder vierten sichtbaren Wellenlängenbereiche vollständig voneinander verschieden sein, d.h. einander nicht überlappen. Der erste sichtbare Wellenlängenbereich, der zweite sichtbare Wellenlängenbereich, der dritte sichtbare Wellenlängenbereich und der vierte sichtbare Wellenlängenbereich können verschieden voneinander und/oder nicht einander überlappend und/oder in dieser Reihenfolge angrenzend aneinander sein. Insbesondere können der erste sichtbare Wellenlängenbereich und der zweite sichtbare Wellenlängenbereich aneinander angrenzend sein und/oder der zweite sichtbare Wellenlängenbereich und der dritte sichtbare Wellenlängenbereich können aneinander angrenzend sein, und/oder der dritte sichtbare Wellenlängenbereich und der vierte sichtbare Wellenlängenbereich können aneinander angrenzend sein. Durch das getrennte Erfassen der Intensität in mehreren sichtbaren Wellenlängenbereichen können bisher unberücksichtigte und/oder nicht erkennbare Effekte, Vorgänge und Fehler des Laserbearbeitungsprozesses erfasst und überwacht werden.

Die verschiedenen Wellenlängenbereiche der sichtbaren Teilstrahlen können ausgewählt sein aus: 350 nm bis 450 nm, 450 nm bis 550 nm, 550nm bis 650nm und 650 nm bis 850 nm. Die mehreren sichtbaren Wellenlängenbereiche, insbesondere der erste, zweite, dritte und/oder vierte sichtbare Wellenlängenbereich, können jeweils mindestens eine Wellenlänge enthalten, die ausgewählt ist aus: 400 nm, 500 nm, 600 nm, 700 nm, 750 nm, 800 nm, einer Wellenlänge eines Bestandteils eines durch den Laserbearbeitungsprozess bearbeiteten Werkstücks, insbesondere einer Stahl-Legierung oder Bestandteilen einer Stahl-Legierung oder einer Aluminium-Legierung oder Bestandteilen einer Aluminium-Legierung, einer Wellenlänge einer Emissionsbande von Aluminiumoxid, einer Wellenlänge einer Emissionsbande von Eisenoxid, und einer Wellenlänge einer atomaren Emissionslinie, insbesondere von Titan, Kupfer, Aluminium oder Eisen. Der erste sichtbare Wellenlängenbereich kann 400 nm umfassen, und/oder der zweite sichtbare Wellenlängenbereich kann 500 nm umfassen, und/oder der dritte sichtbare Wellenlängenbereich kann 600 nm umfassen, und/oder der vierte Wellenlängenbereich kann 750 nm umfassen.

Die Strahlteileranordnung kann ferner eingerichtet sein, wenigstens einen Infrarot-Teilstrahl mit einem Infrarot-Wellenlängenbereich aus dem Prozessstrahl auszukoppeln. Die Sensorvorrichtung kann ferner umfassen: eine zweite Photosensoren-Anordnung zum Erfassen der Intensität des Prozessstrahls im Infrarot-Wellenlängenbereich mit mindestens einem Photosensor, der angeordnet ist, um eine Intensität von dem Infrarot-Teilstrahl zu erfassen.

Die Strahlteileranordnung kann eingerichtet sein, einen ersten Infrarot-Teilstrahl mit einem ersten Infrarot-Wellenlängenbereich und einen zweiten Infrarot-Teilstrahl mit einem zweiten Infrarot-Wellenlängenbereich zu jeweils einem Photosensor der zweiten Photosensoren-Anordnung auszukoppeln. Die zweite Photosensoren-Anordnung kann zum Erfassen einer Intensität des Prozessstrahls im ersten Infrarot-Wellenlängenbereich und im zweiten Infrarot-Wellenlängenbereich eingerichtet sein. Die zweite Photosensoren-Anordnung kann mindestens zwei Photosensoren umfassen. Die zweite Photosensoren-Anordnung kann mindestens zwei Photosensoren umfassen, die angeordnet sind, um eine Intensität von jeweils einem der Infrarot-Teilstrahlen zu erfassen. Die zweite Photosensoren-Anordnung kann einen ersten Photosensor, der angeordnet ist, um eine Intensität des ersten Infrarot-Teilstrahls zu erfassen, und einen zweiten Photosensor, der angeordnet ist, um eine Intensität des zweiten Infrarot-Teilstrahls zu erfassen, umfassen.

Der erste Infrarot-Wellenlängenbereich und der zweite Infrarot-Wellenlängenbereich können (vollständig) verschieden voneinander und/oder in dieser Reihenfolge angrenzend aneinander sein. Einer der Infrarot-Wellenlängenbereiche kann auch im jeweils anderen Infrarot-Wellenlängenbereichen vollständig enthalten sein. Der erste Infrarot-Wellenlängenbereich und der zweite Infrarot-Wellenlängenbereich können gleich sein. Der erste Infrarot-Wellenlängenbereich und der zweite Infrarot-Wellenlängenbereich können verschieden auf die entsprechenden Photosensoren abgebildet sein.

Die mindestens zwei Infrarot-Wellenlängenbereiche, insbesondere der erste und/oder zweite Infrarot-Wellenlängenbereich, können jeweils mindestens eine Wellenlänge enthalten, die ausgewählt ist aus: 1300 nm, 1400 nm, 1500 nm, 1600 nm, 1700nm, 1800 nm, und 1900 nm. Der erste Infrarot-Wellenlängenbereich kann 1500 nm enthalten und/oder hohe Temperaturen repräsentieren. Der zweite Infrarot-Wellenlängenbereich kann 1900 nm enthalten und/oder niedrige Temperaturen repräsentieren. Durch Erfassen der Intensität in zwei Infrarot-Wellenlängenbereichen können Wärme(ab-)leitungseffekte besser erfasst und überwacht werden. Durch den zweiten Infrarot-Teilstrahl können beispielsweise Effekte und Vorgänge überwacht werden, die sich in der weiteren Umgebung des Bearbeitungsbereichs des Werkstücks abspielen, beispielsweise beim Laserschweißen in größerer Entfernung zum Keyhole bzw. zum Schmelzbad. Außerdem können damit schwach glühende Bereiche des Werkstücks erfasst und überwacht werden. Durch den ersten Infrarot-Teilstrahl können beispielsweise Effekte und Vorgänge überwacht werden, die sich am bzw. im Bearbeitungspunkt des Werkstücks, beispielsweise im oder in unmittelbarer Nähe des Keyholes und/oder im Schmelzbad abspielen. Außerdem können damit stark glühende Bereiche des Werkstücks erfasst und überwacht werden.

Der vierte sichtbare Wellenlängenbereich, der Rückreflex-Wellenlängenbereich und der erste Infrarot-Wellenlängenbereich können einander nicht überlappend und/oder in dieser Reihenfolge angrenzend aneinander sein. Insbesondere können der vierte sichtbare Wellenlängenbereich und der Rückreflex-Wellenlängenbereich aneinander angrenzend sein und der Rückreflex-Wellenlängenbereich und der erste Infrarot-Wellenlängenbereich können aneinander angrenzend sein.

Die Strahlteileranordnung kann zum Auskoppeln mehrerer Teilstrahlen aus dem Prozessstrahl eingerichtet sein. Die Strahlteileranordnung kann mehrere Strahlteiler, insbesondere dichroitische Strahlteiler, umfassen. Die Strahlteiler können als teildurchlässige Spiegel ausgebildet sein. Die Strahlteiler können j eweils eine wellenlängenbereichsspezifische Beschichtung, z.B. eine dichroitische Beschichtung, aufweisen, wobei die wellenlängenbereichsspezifische Beschichtung reflektiv oder transmissiv für einen vorgegebenen Wellenlängenbereich ist. Insbesondere können die Strahlteiler jeweils verschiedene Beschichtungen aufweisen. Dadurch wird von jedem Strahlteiler jeweils ein Teilstrahl mit einer bestimmten Wellenlänge bzw. mit einem bestimmten Wellenlängenbereich ausgekoppelt.

Gemäß Ausführungsformen kann die Strahlteileranordnung mindestens drei oder mindestens vier oder mindestens fünf oder mindestens sechs Strahlteiler umfassen. Die Strahlteileranordnung kann Strahlteiler der primären bis tertiären Strahlteilerordnung bzw. der ersten bis dritten Strahlteilerordnung umfassen. Die Strahlteileranordnung kann Strahlteiler der primären bis sextären Strahlteilerordnung bzw. der ersten bis sechsten Strahlteilerordnung umfassen.

Gemäß Ausführungsformen kann jeder der Strahlteiler auf der Strahlachse des durch den optischen Eingang eingetretenen Prozessstrahls und/oder auf einer optischen Achse, die durch den optischen Eingang und/oder durch eine Fokussieroptik definiert ist, angeordnet sein. Die Strahlteiler können entlang der Strahlachse des Prozessstrahls oder einer Achse parallel zur Strahlachse des Prozessstrahls nacheinander angeordnet sein.

Die Strahlteileranordnung kann jeweils einen primären, einen sekundären, und einen tertiären Strahlteiler enthalten. Die Strahlteileranordnung kann jeweils genau einen primären, einen sekundären, und einen tertiären Strahlteiler enthalten. Die Strahlteileranordnung kann also von jeder der ersten, zweiten und dritten Strahlteilerordnung genau einen Strahlteiler enthalten.

Die Strahlteileranordnung kann jeweils einen primären, einen sekundären, einen tertiären, einen quartären, einen quintären, einen sextären usw. Strahlteiler enthalten. Die Strahlteileranordnung kann jeweils genau einen primären, genau einen sekundären, genau einen tertiären, genau einen quartären, genau einen quintären, genau einen sextären usw. Strahlteiler enthalten. Die Strahlteileranordnung kann also von jeder der ersten, zweiten, dritten, vierten, fünften und sechsten Strahlteilerordnung genau einen Strahlteiler enthalten. Mit anderen Worten kann die Strahlteileranordnung eine serielle Anordnung von Strahlteilern aus der ersten bis zu sechsten Strahlteilerordnung umfassen.

Die Strahlteileranordnung kann Strahlteiler der primären bis quartären bzw. ersten bis vierten Strahlteilerordnung umfassen. Die Strahlteileranordnung kann einen primären Strahlteiler umfassen. Die Strahlteileranordnung kann ferner einen ersten sekundären Strahlteiler auf der Strahlachse des vom primären Strahlteiler durchgelassenen Teilstrahls und einen zweiten sekundären Strahlteiler auf der Strahlachse des vom primären Strahlteiler reflektierten Teilstrahls umfassen. Die Strahlteileranordnung kann ferner einen ersten tertiären Strahlteiler auf der Strahlachse des vom ersten sekundären oder vom zweiten sekundären Strahlteiler durchgelassenen Teilstrahls, und einen zweiten tertiären Strahlteiler auf der Strahlachse des vom ersten sekundären Strahlteiler oder des vom zweiten sekundären Strahlteiler reflektierten Teilstrahls umfassen. Die Strahlteileranordnung kann ferner genau einen oder mindestens einen quartären Strahlteiler auf der Strahlachse eines Teilstrahls, der vom ersten tertiären Strahlteiler oder vom zweiten tertiären Strahlteiler reflektiert oder durchgelassen wurde umfassen.

In einer alternativen Strahlteileranordnung können der erste tertiäre Strahlteiler und der zweite tertiäre Strahlteiler verteilt auf zwei Strahlachsen aus den folgenden Strahlachsen angeordnet sein: die Strahlachse des vom ersten sekundären Strahlteilers durchgelassenen Teilstrahls, die Strahlachse des vom ersten sekundären Strahlteilers reflektierten Teilstrahls, die Strahlachse des vom zweiten sekundären Strahlteilers durchgelassenen Teilstrahls, und die Strahlachse des vom zweiten sekundären Strahlteilers reflektierten Teilstrahls. Mit anderen Worten können der erste tertiäre Strahlteiler und der zweite tertiäre Strahlteiler jeweils auf einer Strahlachse eines an den sekundären Strahlteilern reflektierten Teilstrahls oder eines an den sekundären Strahlteilern durchgelassenen Teilstrahls angeordnet sein.

Die Strahlteileranordnung kann Strahlteiler der primären bis quartären bzw. ersten bis vierten Strahlteilerordnung umfassen. Die Strahlteileranordnung kann einen primären Strahlteiler umfassen. Die Strahlteileranordnung kann ferner einen ersten sekundären Strahlteiler auf der Strahlachse des vom primären Strahlteiler durchgelassenen Teilstrahls und einen zweiten sekundären Strahlteiler auf der Strahlachse des vom primären Strahlteiler reflektierten Teilstrahls umfassen. Die Strahlteileranordnung kann ferner einen ersten tertiären Strahlteiler, einen zweiten tertiären Strahlteiler und einen dritten tertiären Strahlteiler umfassen, die verteilt auf drei Strahlachsen aus den folgenden Strahlachsen angeordnet sind: die Strahlachse des vom ersten sekundären Strahlteilers durchgelassenen Teilstrahls, die Strahlachse des vom ersten sekundären Strahlteilers reflektierten Teilstrahls, die Strahlachse des vom zweiten sekundären Strahlteilers durchgelassenen Teilstrahls, und die Strahlachse des vom zweiten sekundären Strahlteilers reflektierten Teilstrahls.

Die Strahlteileranordnung kann von der primären bzw. ersten Strahlteilerordnung einen, insbesondere genau einen, Strahlteiler enthalten.

Die Strahlteileranordnung kann von der sekundären bzw. zweiten Strahlteilerordnung mindestens zwei Strahlteiler enthalten und/oder kann von höheren Strahlteilerordnungen als der sekundären bzw. zweiten Strahlteilerordnung mindestens zwei Strahlteiler enthalten. Die Strahlteileranordnung kann Strahlteiler der primären bis quartären bzw. ersten bis vierten Strahlteilerordnung umfassen. Als Alternative zur seriellen Anordnung kann die Strahlteileranordnung also eine verzweigte Anordnung von Strahlteilern, vorzugsweise aus der ersten bis zur vierten Strahlteilerordnung, umfassen.

Mit einer verzweigten Anordnung der Strahlteiler kann eine Strahlteileranordnung dieselbe Anzahl von Teilstrahlen erzeugen als mit einer seriellen Anordnung, wobei die Summe von (optischen) Wechselwirkungen der Teilstrahlen mit den Strahlteilern reduziert ist. Dies ist insofern vorteilhaft, als dass jede optische Wechselwirkung mit Intensitätsverlusten verbunden ist und Abbildungsfehler bewirken kann. Mit anderen Worten kann die Lichtausbeute der Strahlteileranordnung bei der verzweigten Anordnung der Strahlteiler gegenüber der seriellen Anordnung der Strahlteiler verbessert sein. Zudem kann die verzweigte Anordnung ggf. platzsparender bzw. mit geringerem Formfaktor umgesetzt werden. In einer Ausführungsform kann die Sensorvorrichtung beispielsweise sechs Strahlteiler zum Erzeugen von sieben zu messenden Teilstrahlen umfassen.

Bei einer seriellen Anordnung der Strahlteiler kann in dieser Ausführungsform jeweils genau ein Strahlteiler aus der ersten bis zur sechsten Strahlteilerordnung enthalten sein. Dadurch kann ein erster Teilstrahl eine Wechselwirkung (mit dem primären Strahlteiler), ein zweiter Teilstrahl zwei Wechselwirkungen (jeweils eine Wechselwirkung mit dem primären Strahlteiler und dem sekundären Strahlteiler), ein dritter Teilstrahl drei Wechselwirkung, und ein vierter Teilstrahl, ein fünfter Teilstrahl, ein sechster Teilstrahl bzw. ein siebter Teilstrahl entsprechend vier, fünf, sechs bzw. sechs Wechselwirkungen erfahren. In Summe sind 27 Wechselwirkungen bei einer seriellen Anordnung der sechs Strahlteiler erforderlich, um sieben Teilstrahlen zu erzeugen.

Bei einer verzweigten Anordnung der Strahlteiler kann in dieser Ausführungsform ein Strahlteiler erster Strahlteilerordnung, zwei Strahlteiler zweiter Strahlteilerordnung und drei Strahlteiler dritter Strahlteilerordnung enthalten sein. Dadurch kann ein erster Teilstrahl zwei Wechselwirkung (jeweils eine Wechselwirkung mit dem primären Strahlteiler und dem sekundären Strahlteiler), ein zweiter Teilstrahl drei Wechselwirkungen (jeweils eine Wechselwirkung mit dem primären Strahlteiler, dem sekundären Strahlteiler und dem tertiären Strahlteiler), und jeder der weiteren Teilstrahlen ebenfalls drei Wechselwirkung erfahren. In Summe sind 20 Wechselwirkungen bei einer verzweigten Anordnung der sechs Strahlteiler erforderlich, um sieben Teilstrahlen zu erzeugen.

Gemäß Ausführungsformen kann die Strahlteileranordnung von der sekundären bzw. zweiten und von der tertiären bzw. dritten Strahlteileranordnung zwei Strahlteiler und von der quartären bzw. vierten Strahlteilerordnung einen, insbesondere genau einen, Strahlteiler umfassen.

Gemäß Ausführungsformen kann die Strahlteileranordnung Strahlteiler von jeweils der primären bzw. ersten Strahlteilerordnung und mindestens der sekundären bzw. zweiten Strahlteilerordnung oder höher umfassen. Die Strahlteileranordnung kann also jeweils Strahlteiler der primären bzw. ersten Strahlteilerordnung, der sekundären bzw. zweiten Strahlteilerordnung usw. umfassen.

Gemäß Ausführungsformen kann die Strahlteileranordnung Strahlteiler von jeweils der primären bzw. ersten Strahlteilerordnung, der sekundären bzw. zweiten Strahlteilerordnung, der tertiären bzw. dritten Strahlteilerordnung oder höher umfassen. Die Strahlteileranordnung kann also jeweils Strahlteiler der primären bzw. ersten Strahlteilerordnung, der sekundären bzw. zweiten Strahlteilerordnung, der tertiären bzw. dritten Strahlteilerordnung, usw. umfassen.

Gemäß Ausführungsformen kann die Strahlteileranordnung Strahlteiler von jeweils der primären bzw. ersten Strahlteilerordnung, der sekundären bzw. zweiten Strahlteilerordnung, der tertiären bzw. dritten Strahlteilerordnung, der quartären bzw. vierten Strahlteilerordnung oder höher umfassen. Die Strahlteileranordnung kann also jeweils Strahlteiler der primären bzw. ersten Strahlteilerordnung, der sekundären bzw. zweiten Strahlteilerordnung der tertiären bzw. dritten Strahlteilerordnung, der quartären bzw. vierten Strahlteilerordnung, usw. umfassen.

Gemäß Ausführungsformen kann die Strahlteileranordnung von der sekundären bzw. zweiten Strahlteilerordnung und/oder höher jeweils genau zwei, vier, acht oder 16 Strahlteiler enthalten. Beispielweise kann die Strahlteileranordnung von der sekundären bzw. zweiten Strahlteilerordnung genau zwei Strahlteiler enthalten, und/oder kann von der tertiären bzw. dritten Strahlteilerordnung genau zwei oder genau vier Strahlteiler enthalten, und kann von der quartären bzw. vierten Strahlteilerordnung genau zwei oder genau vier oder genau acht oder genau 16 Strahlteiler enthalten usw.

Diese "verzweigten" Anordnungen der Strahlteiler haben den Vorteil, dass die Gesamtzahl der Wechselwirkungen der einzelnen Teilstrahlen mit einem Strahlteiler im Vergleich zu einer einfachen seriellen Anordnung der Strahlteiler reduziert wird. Eine serielle Anordnung ist dadurch charakterisiert, dass von jeder Strahlteilerordnung (primär, sekundär, tertiär, usw.) genau ein Strahlteiler vorhanden ist. Im Gegensatz dazu können in den verzweigten Anordnungen von jeder Strahlteilerordnung (ab der sekundären bzw. zweiten Strahlteilerordnung) mehrere Strahlteiler vorhanden sein.

Jeder Strahlteiler kann ein dichroitischer Strahlteiler sein. Jeder (primäre oder sekundäre) Strahlteiler kann eingerichtet sein, Strahlung in einem vorgegebenen Wellenlängenbereich zu reflektieren (oder durchzulassen). Jeder (primäre oder sekundäre) Strahlteiler kann eingerichtet sein, Strahlung mit Wellenlängen außerhalb dieses vorgegebenen Wellenlängenbereichs durchzulassen (oder zu reflektieren).

Die Strahlteileranordnung kann mindestens einen Filter umfassen, der vor oder nach einem der Strahlteiler angeordnet ist. Die Strahlteileranordnung kann mindestens einen wellenlängenbereichsspezifischen Filter aufweisen. Der mindestens eine wellenlängenbereichsspezifische Filter kann im Strahlengang von zumindest einem Teilstrahl des Prozessstrahls angeordnet sein.

Jeder der Photosensoren kann zumindest eines der folgenden Elemente umfassen: einen optischen Sensor, eine Photodiode, ein Photodiodenarray, einen CCD-Chip, und einen CMOS-Chip.

Die Sensorflächen der Photosensoren der ersten Photosensoren-Anordnung können unterschiedlich groß sein.

Im Strahlengang vom optischen Eingang zu zumindest einem Photosensor können mindestens zwei Strahlteiler der Strahlteileranordnung angeordnet sein. Das heißt, für zumindest einen Photosensor kann der Prozessstrahl mindestens zwei Strahlteiler der Strahlteileranordnung passieren, bevor der Prozessstrahl als entsprechender Teilstrahl auf den Photosensor trifft. Der Prozessstrahl wird also von den Strahlteilern mindestens zweimal aufgeteilt, bevor der Teilstrahl auf den Photosensor trifft. Dadurch können die Beschichtungen der zwei Strahlteiler einfacher optimiert werden im Vergleich zu einer Aufteilung mit jeweils nur einem Strahlteiler im Strahlengang zu jedem Photosensor. Denn die Wellenlängenbereiche, die jeder der Strahlteiler abdecken muss, können kleiner ausgelegt werden.

Die Sensorvorrichtung kann am Laserbearbeitungskopf angeordnet sein. Die Sensorvorrichtung kann vorzugweise an einem Gehäuse des Laserbearbeitungskopfes angeordnet sein. Besonders bevorzugt kann Sensorvorrichtung am Gehäuse des Laserbearbeitungskopfes angeflanscht sein oder am Gehäuse anflanschbar ausgebildet sein. Insbesondere kann die Sensorvorrichtung an einem Beobachtungsport des Gehäuses angeordnet sein. Insbesondere kann die Sensorvorrichtung koaxial zur Strahlachse des Laserstrahls angeordnet sein. Alternativ kann die Sensorvorrichtung off-axial zur Strahlachse angeordnet sein.

Alternativ kann die Sensorvorrichtung fasergebunden sein. Die Sensorvorrichtung kann eine Lichtaufnahmeoptik im oder am Laserbearbeitungskopf aufweisen. Die Lichtaufnahmeoptik kann extern zum Laserbearbeitungskopf sein. Die Lichtaufnahmeoptik kann koaxial zur Strahlachse des Laserstrahls angeordnet sein.

Alternativ kann die Sensorvorrichtung laserintern ausgebildet sein.

Die Sensorvorrichtung kann zumindest ein Gehäuse aufweisen. Das Gehäuse kann den optischen Eingang umfassen. Der optische Eingang kann derart ausgebildet sein, dass der Prozessstrahl über den optischen Eingang in das Gehäuse der Sensorvorrichtung eintritt. Die Strahlteileranordnung und/oder die Photosensoren-Anordnungen und/oder die Filter können innerhalb des Gehäuses angeordnet sein. Die Sensorvorrichtung kann ferner eine Kopplungseinrichtung, die zum Koppeln der Sensorvorrichtung mit einem Laserbearbeitungskopf eingerichtet ist, aufweisen. Die Kopplungseinrichtung kann am Gehäuse befestigt sein. Die Kopplungseinrichtung kann beispielsweise Durchgangslöcher für Befestigungsmittel umfassen. Die Kopplungseinrichtung kann integriert mit dem Gehäuse bzw. am Gehäuse ausgebildet sein.

Die Sensorvorrichtung kann ferner mindestens eine Fokussieroptik, insbesondere eine Fokussierlinse, aufweisen. Die mindestens eine Fokussieroptik kann im bzw. am optischen Eingang oder im Strahlengang des Prozessstrahls zwischen dem optischen Eingang und der Strahlteileranordnung angeordnet sein. Somit kann die Fokussieroptik im Strahlengang des Prozessstrahls vor einer ersten Aufteilung des Prozessstrahls angeordnet sein, sodass der gesamte in die Sensorvorrichtung eintretende bzw. eingetretene Prozessstrahl die Fokussieroptik durchläuft.

Die Photosensoren-Anordnungen und/oder die Photosensoren können jeweils eingerichtet sein, basierend auf den erfassten Intensitäten entsprechende Sensorsignale zu erzeugen. Ein Sensorsignal, insbesondere die Stärke des Sensorsignals, kann die Intensität des jeweils erfassten Wellenlängenbereichs repräsentieren. Die Sensorsignale können analoge Signale oder digitale Signale sein, die vorzugweise durch Wandlung eines analogen Signals erzeugt werden. Die Sensorsignale können Spannungssignale sein.

Das Laserbearbeitungssystem kann ferner eine Steuereinheit umfassen. Die Steuereinheit kann zum Empfangen und/oder Auswerten der Sensorsignale eingerichtet sein. Insbesondere kann die Steuereinheit eingerichtet sein, die Sensorsignale getrennt voneinander auszuwerten und/oder miteinander zu vergleichen und/oder miteinander zu kombinieren. Die Steuereinheit kann außerdem zum Steuern des Laserbearbeitungsprozesses und/oder zum Regeln des Laserbearbeitungsprozesses basierend auf den Sensorsignalen eingerichtet sein. Insbesondere kann die Steuereinheit eingerichtet sein, um basierend auf den Sensorsignalen zu erkennen, ob ein Prozessfehler des Laserbearbeitungsprozesses vorliegt.

Die Steuereinheit kann zum Auswerten und/oder zum Aufzeichnen der Sensorsignale eingerichtet sein. Das Auswerten der Sensorsignale kann insbesondere für jedes der Sensorsignale getrennt von den anderen Sensorsignalen erfolgen. Folglich kann jeder Wellenlängenbereich getrennt ausgewertet und überwacht werden. Die Steuereinheit kann eingerichtet sein, die (analogen) Sensorsignale in digitale Signale umzuwandeln.

Die Steuereinheit kann eingerichtet sein, um die einzelnen Sensorsignale der ersten Photosensoren-Anordnung zu einem kombinierten Sensorsignal zu kombinieren. Dadurch kann das kombinierte Sensorsignal die gesamte oder mittlere Intensität des gesamten sichtbaren Wellenlängenbereichs repräsentieren. Das kombinierte Sensorsignal kann auch die Addition der Intensität von Teilmengen der sichtbaren Wellenlängenbereiche repräsentieren. Das Kombinieren kann durch Addieren der Sensorsignalwerte der einzelnen Sensorsignale erfolgen. Die Steuereinheit kann eingerichtet sein, um zumindest zwei der einzelnen Sensorsignale miteinander zu vergleichen. Das Vergleichen kann durch Quotientenbildung und/oder Subtraktion der Sensorsignalwerte der zwei einzelnen Sensorsignale erfolgen.

Die Photosensoren können jeweils eine Sensorfläche aufweisen. Die Photosensoren können jeweils derart angeordnet sein, dass sich die Sensorfläche in einem Fokuspunkt des entsprechenden Teilstrahls befindet. Die Sensorvorrichtung kann derart ausgebildet sein, dass bei einer vorgegebenen Fokuslage der Prozessstrahls der Fokus des Prozessstrahls jeweils mit einer Oberfläche von jedem der Photosensoren zusammenfällt.

Das Laserbearbeitungssystem, insbesondere die Steuereinheit, kann eingerichtet sein, um für jedes Sensorsignal eine individuelle Verstärkung einzustellen.

Der Laserbearbeitungsprozess kann ein Lasergravieren, ein Laserschweißen, ein Laserschneiden, ein Laserlöten oder ein Laserauftragsschweißen an einem Werkstück umfassen. Das Werkstück kann ein metallisches Werkstück sein.

### Kurzbeschreibung der Figuren

Ausführungsformen der vorliegenden Offenbarung werden nachfolgend anhand von Figurenbeschrieben. Die Figuren zeigen:
- Fig. 1: ein Laserbearbeitungssystem gemäß Ausführungsformen der vorliegenden Offenbarung;
- Fig. 2: eine schematische Ansicht einer Sensorvorrichtung gemäß Ausführungsformen der vorliegenden Offenbarung; und
- Fig. 3: eine schematische Ansicht einer Sensorvorrichtung gemäß Ausführungsformen der vorliegenden Offenbarung; und
- Fig. 4: ein Diagramm zum Veranschaulichen eines Sensorsignals für die Intensität des Prozessstrahls beim Laserschweißen in einem breitbandigen Wellenbereich.

### Ausführliche Beschreibung

Im Folgenden werden, sofern nicht anders vermerkt, für gleiche und gleichwirkende Elemente dieselben Bezugszeichen verwendet. Eine redundante Beschreibung wiederkehrender Merkmale wird vermieden. Die verschiedenen Ausführungsformen und Merkmale der nachfolgend beschriebenen Figuren sind ausdrücklich kombinierbar und nicht als abgeschlossene Ausführungen zu verstehen.

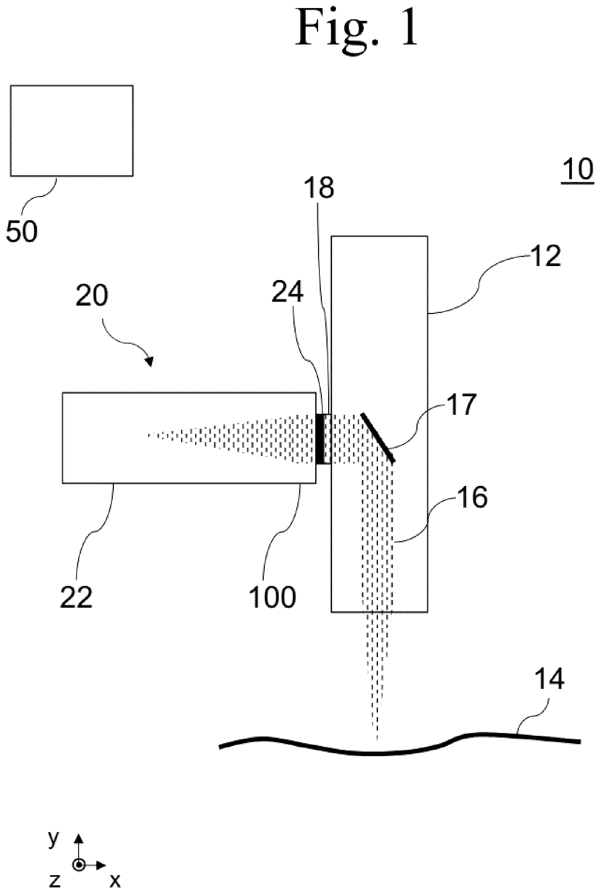

Fig. 1 zeigt ein Laserbearbeitungssystem gemäß Ausführungsformen der vorliegenden Offenbarung.

Das Laserbearbeitungssystem 10 ist zum Durchführen eines Laserbearbeitungsprozesses eingerichtet und umfasst einen Laserbearbeitungskopf 12. Zum Durchführen eines Laserbearbeitungsprozesses wird mittels des Laserbearbeitungskopfes 12, der Fokussier- und Strahlformungsoptiken umfassen kann, ein Laserstrahl (nicht gezeigt) auf ein Werkstück 14 eingestrahlt und fokussiert, wodurch sich das Material des Werkstücks 14 erhitzt, schmilzt und ggf. verdampft. Der Laserbearbeitungsprozess kann ein Laserschweißen, ein Laserschneiden, ein Laserlöten oder ein Laserauftragsschweißen umfassen.

Bei der Bearbeitung entsteht ein Prozessstrahl 16, der in den Laserbearbeitungskopf 12 eintritt und dort von einem Strahlteiler 17 aus einem Strahlengang des Laserstrahls (nicht gezeigt) ausgekoppelt wird. Der Prozessstrahl 16 umfasst die von dem Werkstück 14 zurückgestreute oder zurückreflektierte Laserstrahlung, Strahlung im infraroten Wellenlängenbereich des Lichts, z.B. Temperaturstrahlung, und Strahlung im sichtbaren Wellenlängenbereich des Lichts, z.B. Strahlung eines durch die Bearbeitung entstehenden Plasmas, bzw. eines durch den Laserstrahl hoch angeregten Metalldampfes.

Zum Auskoppeln des Prozessstrahls 16 kann der Laserbearbeitungskopf 12 eine erste Kopplungseinrichtung 18 und einen optischen Ausgang (nicht gezeigt) aufweisen. Der optische Ausgang kann mit der ersten Kopplungseinrichtung 18 kombiniert sein. Der Prozessstrahl wird über den optischen Ausgang des Laserbearbeitungskopfes 12 ausgekoppelt.

Das Laserbearbeitungssystem 10 weist ferner eine Sensorvorrichtung 20 zum Überwachen des Laserbearbeitungsprozesses durch Erfassen einer Intensität des während des Laserbearbeitungsprozesses entstehenden Prozessstrahls 16 gemäß Ausführungsformen der vorliegenden Offenbarung auf. Die Sensorvorrichtung 20 umfasst einen optischen Eingang (nicht gezeigt) zum Einlassen oder Einkoppeln des Prozessstrahls 16 in die Sensorvorrichtung 20. Der optische Eingang kann an einem Gehäuse 22 der Sensorvorrichtung 20 angeordnet sein. Die Sensorvorrichtung 20 kann ferner eine zweite Kopplungseinrichtung 24 zum Koppeln der Sensorvorrichtung 20 mit dem Laserbearbeitungskopf umfassen. Die Kopplungseinrichtung 24 kann mit dem optischen Eingang kombiniert sein.

Der Strahlteiler 17 kann nach einer Fokussieroptik im Strahlengang des Prozessstrahls16 im Laserbearbeitungskopf 12 angeordnet sein. Der Prozessstrahl 16 kann somit kollimiert in die Sensorvorrichtung 20 eingekoppelt werden.

Das Werkstück 14 kann ein metallisches Werkstück sein, und kann insbesondere eisenhaltiges Material, beispielsweise eine Stahl-Legierung oder Eisen, oder aluminiumhaltiges Material, beispielsweise Aluminium oder eine Aluminium-Legierung, umfassen.

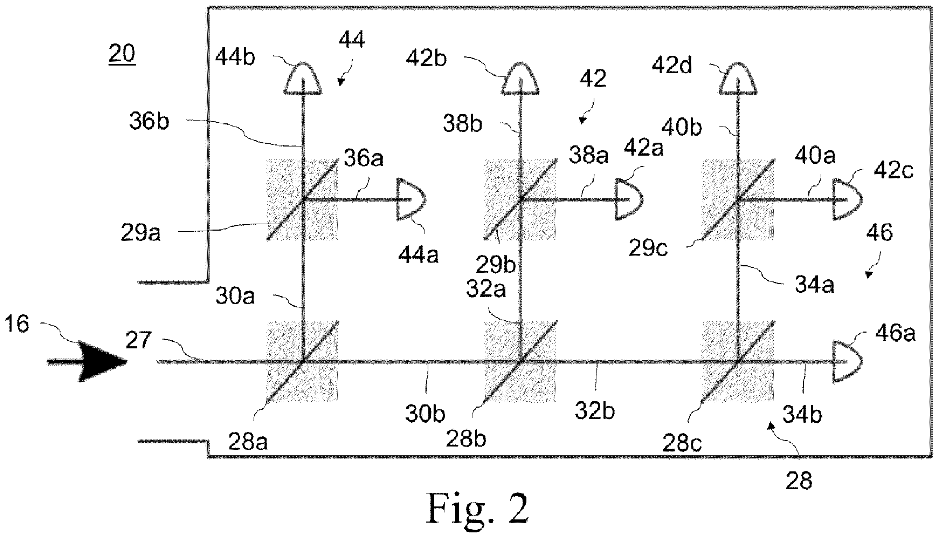

Nachfolgend wird die Sensorvorrichtung 20 im Detail beschrieben. Fig. 2 zeigt eine schematische Ansicht einer Sensorvorrichtung gemäß Ausführungsformen der vorliegenden Offenbarung.

Die Sensorvorrichtung 20 kann eine Fokussieroptik umfassen (nicht gezeigt), beispielsweise eine Fokussierlinse, zum Fokussieren des in die Sensorvorrichtung eingekoppelten Prozessstrahls 16. Die Strahlachse 27 des Prozessstrahls 16 fällt mit einer optischen Achse der Fokussieroptik zusammen. Die Fokussieroptik kann zum Fokussieren des Prozessstrahls 16 bzw. später beschriebenen Teilstrahlen auf ebenfalls später beschriebene Photosensoren vorgesehen sein. Die vorliegende Offenbarung ist hierauf aber nicht beschränkt. Der Prozessstrahl 16 kann auch kollimiert in die Sensorvorrichtung 20 eintreten.

Die Sensorvorrichtung 20 umfasst eine Strahlteileranordnung 28 sowie eine erste Photosensoren-Anordnung 42 zum Erfassen der Intensität des Prozessstrahls 16 im sichtbaren Wellenlängenbereich und eine zweite Photosensoren-Anordnung 44 zum Erfassen der Intensität des Prozessstrahls 16 im Infrarot-Wellenlängenbereich. Die Sensorvorrichtung 20 kann ferner wie in Fig. 2 gezeigt eine dritte Photosensoren-Anordnung 46 zum Erfassen der Intensität des Prozessstrahls 16 im Rückreflex-Wellenlängenbereich umfassen. Jede der Photosensoren-Anordnungen 42, 44, 46 umfasst zumindest einen Photosensor 42a, 42b, 42c, 42d, 44a, 44b, 46a. Die Strahlteileranordnung 28 dient zum Aufteilen des Prozessstrahls 16, um Teilstrahlen mit unterschiedlichen Wellenlängenbereichen aus dem Prozessstrahl 16 auszukoppeln und jeweils zu einem der Photosensoren der Photosensoren-Anordnungen 42, 44, 46 zu führen. Ein Photosensor kann beispielsweise als Photodiode ausgebildet sein.

Die Strahlteileranordnung 28 umfasst beispielsweise mehrere Strahlteiler, die als teildurchlässige Spiegel ausgebildet sind. Die Strahlteiler können jeweils eine reflektive wellenlängenbereichsspezifische Beschichtung und/oder eine transmissive wellenlängenbereichsspezifische Beschichtung aufweisen. Dadurch wird von jedem Strahlteiler der Strahlteileranordnung 28 jeweils ein Teilstrahl mit einem bestimmten Wellenlängenbereich reflektiert bzw. durchgelassen. Die Strahlteileranordnung 28 kann ferner mindestens einen wellenlängenbereichsspezifischen Filter (nicht gezeigt) aufweisen, der im Strahlengang von zumindest einem Teilstrahl des Prozessstrahls angeordnet ist.

Die in Fig. 2 gezeigte Strahlteileranordnung 28 umfasst beispielhaft einen primären Strahlteiler 28a, einen ersten sekundären Strahlteiler 28b, und einen ersten tertiären Strahlteiler 28c, die hintereinander auf einer Linie bzw. Achse angeordnet sind. Der primäre Strahlteiler 28a ist als erster Strahlteiler im Strahlengang des Prozessstrahls 16 entlang der Strahlachse 27 nach der Fokussieroptik angeordnet. Der primäre Strahlteiler 28a teilt den Prozessstrahl 16 in zwei Teilstrahlen auf. Ein erster Teil des Prozessstrahls 16 wird als erster primärer reflektierter Teilstrahl 30a reflektiert. Ein zweiter Teil des Prozessstrahls 16 wird als erster primärer durchgelassener Teilstrahl 30b durchgelassen. Eine Strahlachse des Teilstrahls 30b nach dem Strahlteiler 28a kann mit der Strahlachse des in die Sensorvorrichtung 20 eingetretenen Prozessstrahls 16 vor dem primären Strahlteiler 28a im Wesentlichen zusammenfallen oder parallel dazu sein.

Der erste sekundäre Strahlteiler 28b ist im Strahlengang des vom Strahlteiler 28a durchgelassenen Teilstrahls 30b angeordnet. Der Strahlteiler 28b teilt den durchgelassenen Teilstrahl 30b in zwei Teile auf. Ein erster Teil des Teilstrahls 30b wird als erster sekundärer reflektierter Teilstrahl 32a reflektiert. Ein zweiter Teil des Teilstrahls 30b wird als erster sekundärer durchgelassener Teilstrahl 32b durchgelassen. Eine Strahlachse des Teilstrahls 32b nach dem Strahlteiler 28b kann mit der Strahlachse des Teilstrahls 30b vor dem Strahlteiler 28b und/oder mit der Strahlachse des Prozessstrahls 16 vor dem Strahlteiler 28a im Wesentlichen zusammenfallen oder parallel dazu sein.

Der erste tertiäre Strahlteiler 28c ist im Strahlengang des vom Strahlteiler 28b durchgelassenen Teilstrahls 32b angeordnet. Der Strahlteiler 28c teilt den durchgelassenen Teilstrahl 32b in zwei Teile auf. Ein erster Teil des Teilstrahls 32b wird als erster tertiärer reflektierter Teilstrahl 34a reflektiert. Ein zweiter Teil des Teilstrahls 32b wird als erster tertiärer durchgelassener Teilstrahl 34b durchgelassen. Eine Strahlachse des Teilstrahls 34b nach dem Strahlteiler 28c kann mit der Strahlachse des Teilstrahls 32b vor dem Strahlteiler 28c und/oder mit der Strahlachse des Prozessstrahls 16 vor dem Strahlteiler 28a im Wesentlichen zusammenfallen oder parallel dazu sein.

Die Strahlteileranordnung umfasst ferner einen zweiten sekundäre Strahlteiler 29a, einen zweiten tertiären Strahlteiler 29b, und einen quartären Strahlteiler 29c. Im Strahlengang des vom primären Strahlteiler 28a reflektierten Teilstrahls 30a ist der zweite sekundäre Strahlteiler 29a angeordnet. Der Strahlteiler 29a teilt den reflektierten Teilstrahl 30a in zwei Teile auf. Ein erster Teil des Teilstrahls 30a wird als zweiter sekundärer reflektierter Teilstrahl 36a reflektiert. Ein zweiter Teil des Teilstrahls 30a wird als zweiter sekundärer durchgelassener Teilstrahl 36b durchgelassen. Eine Strahlachse des Teilstrahls 36b nach dem Strahlteiler 29a kann mit der Strahlachse des Teilstrahls 30a vor dem Strahlteiler 29a im Wesentlichen zusammenfallen oder parallel dazu sein.

Im Strahlengang des vom ersten sekundären Strahlteiler 28b reflektierten Teilstrahls 32a ist der zweite tertiäre Strahlteiler 29b angeordnet. Der Strahlteiler 29b teilt den reflektierten Teilstrahl 32a in zwei Teile auf. Ein erster Teil des Teilstrahls 32a wird als zweiter tertiärer reflektierter Teilstrahl 38a reflektiert. Ein zweiter Teil des Teilstrahls 32a wird als zweiter tertiärer durchgelassener Teilstrahl 38b durchgelassen. Eine Strahlachse des Teilstrahls 38b nach dem Strahlteiler 29b kann mit der Strahlachse des Teilstrahls 32a vor dem Strahlteiler 29b im Wesentlichen zusammenfallen oder parallel dazu sein.

Im Strahlengang des vom ersten tertiären Strahlteiler 28c reflektierten Teilstrahls 34a ist der quartäre Strahlteiler 29c angeordnet. Der Strahlteiler 29c teilt den reflektierten Teilstrahl 34a in zwei Teile auf. Ein erster Teil des Teilstrahls 34a wird als quartärer reflektierter Teilstrahl 40a reflektiert. Ein zweiter Teil des Teilstrahls 34a wird als quartärer durchgelassener Teilstrahl 40b durchgelassen. Eine Strahlachse des Teilstrahls 40b nach dem Strahlteiler 29c kann mit der Strahlachse des Teilstrahls 34a vor dem Strahlteiler 29c im Wesentlichen zusammenfallen oder parallel dazu sein.

Die Strahlteileranordnung 28 ist nicht auf die in Fig. 2 gezeigte Ausführungsform begrenzt.

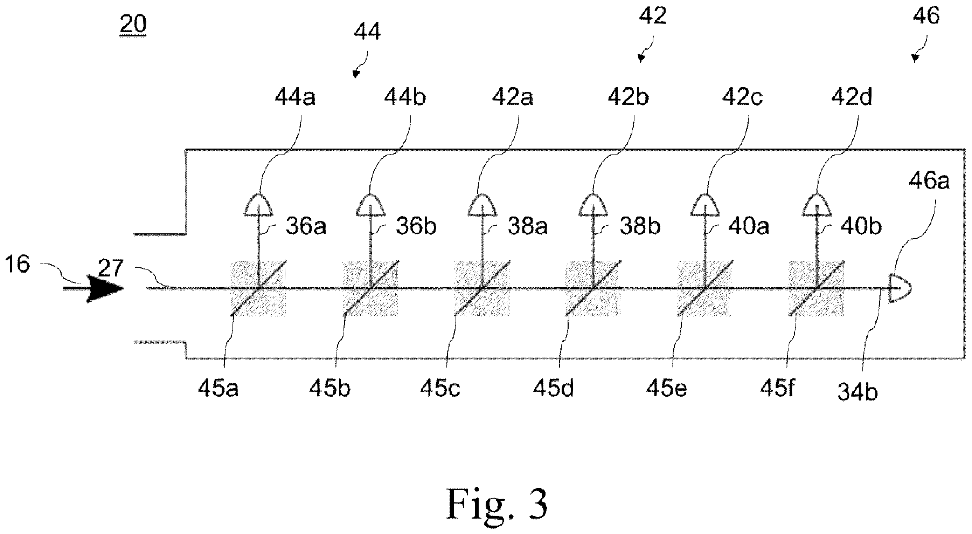

In Fig. 3 ist eine weitere Ausführungsform einer Sensorvorrichtung gezeigt. Darin umfasst die Strahlteileranordnung 28 sechs Strahlteiler, die hintereinander entlang der Strahlachse 27 des in die Sensorvorrichtung 20 eintretenden Prozessstrahls 16 angeordnet sind. Die Sensorvorrichtung der Fig. 3 umfasst einen primären Strahlteiler 45a, einen sekundären Strahlteiler 45b, einen tertiären Strahlteiler 45c, einen quartären Strahlteiler 45d, einen quintären Strahlteiler 45e und einen sextären Strahlteiler 45f. Jeder der primären bis quintären Strahlteiler 45a-45e dient zum Auskoppeln eines entsprechenden Teilstrahl 36a, 36b, 38a, 38b, 40a, 40b. Der sextäre Strahlteiler dient zum Auskoppeln der Teilstrahlen 40b und 46a.

Die Teilstrahlen 38a, 38b, 40a, 40b weisen voneinander verschiedene sichtbare Wellenlängenbereiche auf. Diese Teilstrahlen dienen zum Erfassen von Intensitäten des Prozessstrahls 16 in den verschiedenen sichtbaren Wellenlängenbereichen und können daher auch als sichtbare Teilstrahlen bezeichnet werden. Beispielsweise kann der erste Teilstrahl 38a einen ersten sichtbaren Wellenlängenbereich um 400 nm umfassen und kann zum Erfassen von atomaren Emissionslinien, insbesondere von atomaren Emissionslinien von Aluminium oder Eisen, dienen. Der zweite Teilstrahl 38b kann einen zweiten sichtbaren Wellenlängenbereich um 500 nm umfassen und kann beispielsweise zum Erfassen von molekularen Emissionsbanden, beispielsweise von Aluminiumoxid, dienen. Der dritte Teilstrahl 40a kann einen dritten sichtbaren Wellenlängenbereich um 600 nm umfassen und kann zum Erfassen von molekularen Emissionsbanden, beispielsweise von Eisenoxid dienen. Der vierte Teilstrahl 40b kann einen vierten sichtbaren Wellenlängenbereich um 750 nm umfassen. Der vierte sichtbare Wellenlängenbereich kann bis in den nahen Infrarotbereich hineinreichen.

Die gezeigte Strahlteileranordnung 28 koppelt vier sichtbare Teilstrahlen aus. Die vorliegende Offenbarung ist hierauf aber nicht beschränkt. Die Strahlteileranordnung 28 kann beispielsweise auch nur zwei sichtbare Teilstrahlen auskoppeln, beispielsweise den ersten sichtbaren Teilstrahl 38a und den zweiten sichtbaren Teilstrahl 38b oder den ersten sichtbaren Teilstrahl 38a und den dritten sichtbaren Teilstrahl 40a.

Die Teilstrahlen 36a, 36b weisen voneinander verschiedene Infrarot-Wellenlängenbereiche auf. Diese Teilstrahlen dienen zum Erfassen von Intensitäten des Prozessstrahls 16 in den verschiedenen Infrarot-Wellenlängenbereichen und können daher auch als Infrarot-Teilstrahlen bezeichnet werden. Der erste Infrarot-Teilstrahl 36a kann einen Infrarot-Wellenlängenbereich um 1500 nm umfassen. Dieser Infrarot-Teilstrahl 36a kann zum Erfassen einer Temperaturstrahlung dienen, die eine hohe Temperatur repräsentiert. Dadurch können beispielsweise Effekte und Vorgänge überwacht werden, die sich im Bereich des Keyholes und/oder des Schmelzbads abspielen. Der zweite Infrarot-Teilstrahl 36b kann einen Infrarot-Wellenlängenbereich um 1900 nm umfassen. Dieser Infrarot-Teilstrahl 36b kann zum Erfassen einer Temperaturstrahlung dienen, die niedrige Temperaturen beinhaltet. Dadurch können beispielsweise Effekte und Vorgänge überwacht werden, die die Wärmeleitung ausgehend vom Auftreffpunkt des Laserstrahls auf dem Werkstück bzw. ausgehend vom Keyhole oder Schmelzbad betreffen.

Der Teilstrahl 34b weist die Wellenlänge des Laserstrahls auf. Er dient zum Erfassen einer Intensität des Rückreflexes des Laserstrahls vom Werkstück 14 als Teil des Prozessstrahls 16 und kann daher auch als Rückreflex-Teilstrahl 34b bezeichnet werden.

Die Strahlteileranordnung 28 führt die Teilstrahlen 38a, 38b, 40a, 40b zu jeweils einem Photosensor der ersten Photosensoren-Anordnung 42 zum Erfassen der Intensität des Prozessstrahls 16 im sichtbaren Wellenlängenbereich. Die erste Photosensoren-Anordnung 42 weist in dem gezeigten Beispiel vier Photosensoren 42a-42d auf. Jeder der vier Photosensoren 42a-42d ist angeordnet, um die Intensität von genau einem der Teilstrahlen 38a, 38b, 40a, 40b zu erfassen. Beispielsweise erfasst der erste Photosensor 42a die Intensität des ersten sichtbaren Teilstrahls 38a, und so weiter. Durch die Ausgestaltung der Strahlteileranordnung 28, die die verschiedenen Teilstrahlen 38a, 38b, 40a, 40b mit unterschiedlichen sichtbaren Wellenlängenbereichen aus dem Prozessstrahl 16 auskoppelt, können dennoch die Intensitäten der unterschiedlichen sichtbaren Wellenlängenbereiche getrennt voneinander erfasst und überwacht werden.

Die Strahlteileranordnung führt die Teilstrahlen 36a, 36b zu jeweils einem Photosensor der zweiten Photosensoren-Anordnung 44 zum Erfassen der Intensität des Prozessstrahls 16 im Infrarot-Wellenlängenbereich. Die zweite Photosensoren-Anordnung 44 weist in dem gezeigten Beispiel zwei Photosensoren 44a, 44b auf. Jeder der zwei Photosensoren 44a, 44b ist angeordnet, um die Intensität von genau einem der Teilstrahlen 36a, 36b zu erfassen. Beispielsweise erfasst der erste Photosensor 44a die Intensität des ersten Infrarot-Teilstrahls 36a. Durch die Ausgestaltung der Strahlteileranordnung 28, die die verschiedenen Teilstrahlen 36a, 36b mit unterschiedlichen sichtbaren Wellenlängenbereichen aus dem Prozessstrahl 16 auskoppelt, können dennoch die Intensitäten der unterschiedlichen Infrarot-Wellenlängenbereiche getrennt voneinander erfasst und überwacht werden. Die zwei Photosensoren 44a, 44b können jedoch unterschiedliche Größen der Sensorflächen aufweisen. Insbesondere kann der erste Photosensor 44a eine Sensorfläche aufweisen, die auf die Abbildung des Bearbeitungsbereichs, z.B. des Keyholes oder des Schmelzbades, beschränkt ist. Der zweite Photosensor 44b kann eine Sensorfläche aufweisen, die eine Abbildung des Bearbeitungsbereichs und seiner Umgebung ermöglicht. Mit anderen Worten kann der zweite Photosensor 44b eine größere Sensorfläche als der erste Photosensor 44a aufweisen.

Die Strahlteileranordnung führt den Teilstrahl 34b zu einer dritten Photosensoren-Anordnung 46 zum Erfassen der Intensität des Prozessstrahls 16 im Rückreflex-Wellenlängenbereich. Die dritte Photosensoren-Anordnung 46 umfasst einen Photosensor 46a, der angeordnet ist, um eine Intensität des Rückreflex-Teilstrahls 34b zu erfassen.

Die Strahlteileranordnung 28, die Photosensoren-Anordnungen 42, 44, 46 und ggf. weitere Filter und optische Elemente, wie die Fokussieroptik, sind innerhalb des Gehäuses 22 (in Fig. 2 nicht gezeigt) angeordnet.

Die Photosensoren aller Photosensoren-Anordnungen 42, 44, 46 sind jeweils eingerichtet, basierend auf der jeweils erfassten Intensität ein entsprechendes Sensorsignal, beispielsweise ein analoges Spannungssignal zu erzeugen. Beispielsweise kann die Spannungsstärke ein Maß für die Intensität des jeweils erfassten Wellenlängenbereichs sein.

Das in Fig. 1 gezeigte Laserbearbeitungssystem 10 kann eine Steuereinheit 50 umfassen, die die Sensorsignale aller Photosensoren empfängt. Die Steuereinheit 50 kann zum Regeln des Laserbearbeitungsprozesses basierend auf den empfangenen Sensorsignalen eingerichtet sein. Insbesondere kann die Steuereinheit eingerichtet sein, um basierend auf den empfangenen Sensorsignalen zu erkennen, ob ein Prozessfehler des Laserbearbeitungsprozesses aufgetreten ist. Die Steuereinheit kann außerdem dazu eingerichtet sein, um für jedes Sensorsignal eine individuelle Verstärkung einzustellen.

Die Steuereinheit kann ferner zum Auswerten und/oder zum Aufzeichnen der Sensorsignale eingerichtet sein. Das Auswerten der Sensorsignale kann insbesondere für jedes der Sensorsignale separat oder getrennt von den anderen Sensorsignalen erfolgen. Folglich kann jeder Wellenlängenbereich getrennt ausgewertet und überwacht werden.

Die Erfindung betrifft eine Sensorvorrichtung zur Prozessüberwachung, insbesondere beim Schweißen von Bauteilen, durch Aufnahme des Prozessstrahls bzw. der Prozessemissionen in mehreren Wellenlängenbereichen. In einer möglichen Ausführungsform enthält die Sensorvorrichtung vier Photodioden für das sichtbare Spektrum zur Erfassung von Prozessemissionen im erweiterten sichtbaren Wellenlängenbereich, eine Photodiode für den Bereich der Laserwellenlänge zur Messung von Rückreflexen des Lasers sowie zwei Photodioden zur Erfassung von Prozessemissionen im infraroten oder Temperatur-Spektralbereich. Eine Strahlteileranordnung der Sensorvorrichtung kann in einer möglichen Ausführung in einer Hintereinanderschaltung ausgeführt sein, sodass es drei primäre Strahlteiler sowie drei Sekundärstrahlteiler gibt, die das bereits aufgeteilte Licht weiter unterteilen und auf je zwei Kanäle lenken.

Durch die erfindungsgemäße Strahlteileranordnung ist es möglich, eine Überwachung von Laserbearbeitungsprozessen in mehreren Wellenlängenbereichen zu ermöglichen und gleichzeitig die optische Abbildung jedes einzelnen Wellenlängenbereichs bzw. Kanals getrennt voneinander zu optimieren. Die Sensorvorrichtung ermöglicht beispielsweise eine optimierte Auslegung der Abbildung, indem die Sensorflächengröße jeder einzelnen Photodiode passend ausgewählt werden kann. Zusätzlich ist es mit der beschriebenen Vorrichtung möglich, die Sensorsignale jeder einzelnen Photodiode getrennt voneinander zu verstärken. So kann üblicherweise das Signal des Laserrückreflex eine sehr hohe Intensität aufweisen. Die Intensität der Emission im Temperaturbereich im Vergleich dazu ist meist um Größenordnungen geringer. Allgemein betrachtet können die Teilstrahlen um Größenordnungen unterschiedliche Signalintensitäten aufweisen. Daher ist es vorteilhaft, wenn die Signale der Photodioden getrennt voneinander eingestellt werden können. Dies wird durch die Sensorvorrichtung der vorliegenden Erfindung ermöglicht und ist mit typischen Spektrometern aufgrund der CCD- bzw. CMOS-Bauweise nicht bzw. nicht einfach umsetzbar.

## Patentansprüche

1. Sensorvorrichtung (20) zum Überwachen eines Laserbearbeitungsprozesses mittels eines Laserstrahls durch Erfassen einer Intensität eines während des Laserbearbeitungsprozesses entstehenden Prozessstrahls (16), die Sensorvorrichtung (20) umfassend:
- eine Strahlteileranordnung (28) eingerichtet, um aus dem Prozessstrahl (16) mindestens vier sichtbare Teilstrahlen (38a,b, 40a,b) mit einem jeweiligen sichtbaren Wellenlängenbereich auszukoppeln;
- eine erste Photosensoren-Anordnung (42) zum Erfassen der Intensität des Prozessstrahls (16) im sichtbaren Wellenlängenbereich mit mehreren Photosensoren (42a-d), die angeordnet sind, um jeweils eine Intensität von einem der mindestens vier sichtbaren Teilstrahlen (38a,b, 40a,b) zu erfassen,
wobei die Strahlteileranordnung (28) eingerichtet ist, einen ersten sichtbaren Teilstrahl (38a) mit einen ersten sichtbaren Wellenlängenbereich, einen zweiten sichtbaren Teilstrahl (38b) mit einem zweiten sichtbaren Wellenlängenbereich, einen dritten sichtbaren Teilstrahl (40a) mit einem dritten sichtbaren Wellenlängenbereich und einen vierten sichtbaren Teilstrahl (40b) mit einem vierten sichtbaren Wellenlängenbereich zu jeweils einem Photosensor (42a-d) der ersten Photosensoren-Anordnung (42) auszukoppeln, und
wobei die erste Photosensoren-Anordnung (42) umfasst:
einen ersten Photosensor (42a), der angeordnet ist, um eine Intensität des ersten sichtbaren Teilstrahls (38a) zu erfassen,
einen zweiten Photosensor (42b), der angeordnet ist, um eine Intensität des zweiten sichtbaren Teilstrahls (38b) zu erfassen,
einen dritten Photosensor (42c), der angeordnet ist, um eine Intensität des dritten sichtbaren Teilstrahls (40a) zu erfassen, und
einen vierten Photosensor (42d), der angeordnet ist, um eine Intensität des vierten sichtbaren Teilstrahls (40b) zu erfassen.

2. Sensorvorrichtung gemäß Anspruch 1, wobei die Strahlteileranordnung (28) ferner eingerichtet ist, einen Rückreflex-Teilstrahl (34b) mit einem Rückreflex-Wellenlängenbereich aus dem Prozessstrahl (16) auszukoppeln,
wobei die Sensorvorrichtung (20) ferner eine dritte Photosensoren-Anordnung (46) zum Erfassen der Intensität des Prozessstrahls (16) im Rückreflex-Wellenlängenbereich umfasst, wobei die dritte Photosensoren-Anordnung (46) mindestens einen Photosensor (46a) umfasst, der angeordnet ist, um eine Intensität von dem Rückreflex-Teilstrahl (34b) zu erfassen,
wobei der Rückreflex-Wellenlängenbereich die Wellenlänge des Laserstrahls umfasst und/oder ein Wellenlängenbereich von 950 nm bis 1150 nm ist oder wobei der Rückreflex-Wellenlängenbereich einen Wellenlängenbereich im grünen Spektralbereich oder im blauen Spektralbereich umfasst.

3. Sensorvorrichtung gemäß einem der vorstehenden Ansprüche, wobei die Strahlteileranordnung (28) ferner eingerichtet ist, wenigstens einen Infrarot-Teilstrahl (36a, 36b) mit einem Infrarot-Wellenlängenbereich aus dem Prozessstrahl (16) auszukoppeln,
wobei die Sensorvorrichtung (20) ferner umfasst: eine zweite Photosensoren-Anordnung (44) zum Erfassen der Intensität des Prozessstrahls (16) im Infrarot-Wellenlängenbereich mit mindestens einem Photosensor (44a,b), der angeordnet ist, um eine Intensität von dem Infrarot-Teilstrahl (36a, 36b) zu erfassen,
wobei der mindestens eine Infrarot-Wellenlängenbereich vorzugsweise mindestens eine Wellenlänge enthält, die ausgewählt ist aus: 1300 nm, 1400 nm, 1500 nm, 1600 nm, 1700nm, 1800 nm, und 1900 nm.

4. Sensorvorrichtung gemäß einem der vorstehenden Ansprüche, wobei die mehreren sichtbaren Wellenlängenbereiche einander nicht überlappen; und/oder
wobei jeder der mehreren sichtbaren Wellenlängenbereiche mindestens eine Wellenlänge enthält, die ausgewählt ist aus: 400 nm, 500 nm, 600 nm, 700 nm, 750 nm, 800 nm, einer Wellenlänge einer Emissionsbande von Aluminiumoxid, einer Wellenlänge einer Emissionsbande von Eisenoxid, und einer Wellenlänge einer atomaren Emissionslinie, insbesondere eines durch den Laserbearbeitungsprozess bearbeiteten Werkstücks, insbesondere von Kupfer, Aluminium oder Eisen; und/oder
wobei die Strahlteileranordnung (28) eingerichtet ist, um jeden der mehreren Teilstrahlen mit einer vorgegebenen optischen Abbildung und/oder einer individuell einstellbaren optischen Abbildung zum entsprechenden Photosensor auszukoppeln.

5. Sensorvorrichtung gemäß einem der vorstehenden Ansprüche, wobei die Strahlteileranordnung (28) eine Abbildungseinrichtung aufweist, wobei die Abbildungseinrichtung für mindestens einen Teilstrahl eine Blende aufweist und/oder für mindestens einen Teilstrahl mindestens ein optisches Element, beispielsweise eine Linse oder ein Linsensystem, zur Einstellung der Abbildung des Teilstrahls auf eine Sensorfläche des entsprechenden Photosensors aufweist,
wobei für jeden Teilstrahl vorzugsweise eine Größe der Sensorfläche des entsprechenden Photosensors und/oder eine Position der Sensorfläche entlang der Strahlachse unabhängig und/oder unterschiedlich von den anderen Teilstrahlen gewählt ist oder einstellbar ist.

6. Sensorvorrichtung gemäß einem der vorstehenden Ansprüche, wobei die Strahlteileranordnung (28) eingerichtet ist, einen ersten Infrarot-Teilstrahl (36a) mit einem ersten Infrarot-Wellenlängenbereich und einen zweiten Infrarot-Teilstrahl (36b) mit einem vom ersten Infrarot-Wellenlängenbereich verschiedenen zweiten Infrarot-Wellenlängenbereich auszukoppeln;
wobei die zweite Photosensoren-Anordnung (44) mindestens zwei Photosensoren (44a,b) umfasst, die angeordnet sind, um jeweils eine Intensität von einem der Infrarot-Teilstrahlen (36a,b) zu erfassen.

7. Sensorvorrichtung gemäß einem der vorstehenden Ansprüche, wobei die Strahlteileranordnung (28) umfasst:
- mindestens drei oder mindestens vier oder mindestens fünf oder mindestens sechs Strahlteiler (28a-c); und/oder
- jeweils einen primären, einen sekundären, einen tertiären, einen quartären, einen quintären und einen sextären Strahlteiler umfasst, die vorzugsweise nacheinander entlang der Strahlachse (27) des Prozessstrahls (16) angeordnet sind.

8. Sensorvorrichtung gemäß einem der Ansprüche 1 bis 7, wobei die Strahlteileranordnung (28) von einer zweiten Strahlteilerordnung und/oder von einer höheren Strahlteilerordnung als der zweiten Strahlteilerordnung mindestens zwei Strahlteiler umfasst, wobei die Strahlteilerordnung angibt, wie viele optische Wechselwirkungen ein Teilstrahl in der Strahlteileranrodnung (28) höchstens mit den entsprechenden Strahlteilern ausführt.

9. Sensorvorrichtung gemäß einem der Ansprüche 1 bis 8, wobei die Strahlteileranordnung (28) umfasst:
- einen primären Strahlteiler;
- einen ersten sekundären Strahlteiler auf der Strahlachse des vom primären Strahlteiler durchgelassenen Teilstrahls und einen zweiten sekundären Strahlteiler auf der Strahlachse des vom primären Strahlteiler reflektierten Teilstrahls; und
- einen ersten tertiären Strahlteiler und einen zweiten tertiären Strahlteiler, die verteilt auf zwei Strahlachsen aus den folgenden Strahlachsen angeordnet sind: die Strahlachse des vom ersten sekundären Strahlteilers durchgelassenen Teilstrahls, die Strahlachse des vom ersten sekundären Strahlteilers reflektierten Teilstrahls, die Strahlachse des vom zweiten sekundären Strahlteilers durchgelassenen Teilstrahls, und die Strahlachse des vom zweiten sekundären Strahlteilers reflektierten Teilstrahls;
- einen quartären Strahlteiler auf der Strahlachse eines vom ersten tertiären Strahlteiler oder vom zweiten tertiären Strahlteiler reflektierten oder durchgelassenen Teilstrahls; oder
- einen ersten tertiären Strahlteiler, einen zweiten tertiären Strahlteiler und einen dritten tertiären Strahlteiler, die verteilt auf drei Strahlachsen aus den folgenden Strahlachsen angeordnet sind: die Strahlachse des vom ersten sekundären Strahlteilers durchgelassenen Teilstrahls, die Strahlachse des vom ersten sekundären Strahlteilers reflektierten Teilstrahls, die Strahlachse des vom zweiten sekundären Strahlteilers durchgelassenen Teilstrahls, und die Strahlachse des vom zweiten sekundären Strahlteilers reflektierten Teilstrahls.

10. Sensorvorrichtung gemäß einem der vorstehenden Ansprüche, wobei die Strahlteileranordnung (28) mindestens einen Strahlteiler aufweist, der eine wellenlängenbereichsspezifische Beschichtung aufweist, und/oder
wobei die Strahlteileranordnung mindestens einen wellenlängenbereichsspezifischen Filter aufweist, der im Strahlengang von zumindest einem Teilstrahl des Prozessstrahls (16) angeordnet ist, und/oder
wobei der Prozessstrahl (16) mindestens zwei Strahlteiler der Strahlteileranordnung (28) passiert, bevor der Prozessstrahl (16) als entsprechender Teilstrahl auf den Photosensor trifft.

11. Sensorvorrichtung gemäß einem der vorstehenden Ansprüche, ferner aufweisend:
- ein Gehäuse (22), wobei das Gehäuse einen optischen Eingang zum Einlassen des Prozessstrahls umfasst, wobei die Strahlteileranordnung (28) und die Photosensoren-Anordnungen (42-44) innerhalb des Gehäuses (22) angeordnet sind, und
- eine Kopplungseinrichtung (24) zum Koppeln der Sensorvorrichtung (20) mit einem Laserbearbeitungskopf (12), wobei die Kopplungseinrichtung (24) am Gehäuse (22) befestigt ist.

12. Laserbearbeitungssystem (10) zum Durchführen eines Laserbearbeitungsprozesses, das Laserbearbeitungssystem (10) umfassend:
- einen Laserbearbeitungskopf (12), eingerichtet zum Einstrahlen eines Laserstrahls auf ein Werkstück (14) zum Durchführen eines Laserbearbeitungsprozesses, und
- eine Sensorvorrichtung (20) gemäß einem der vorstehenden Ansprüche,
wobei der Laserbearbeitungskopf (12) mindestens einen Strahlteiler (17) aufweist, der angeordnet ist, um einen während des Laserbearbeitungsprozesses entstehenden und in den Laserbearbeitungskopf eingetretenen Prozessstrahl (16) aus dem Strahlengang des Laserstrahls zu der Sensorvorrichtung (20) auszukoppeln.

13. Laserbearbeitungssystem gemäß Anspruch 12, wobei die Photosensoren jeweils eingerichtet sind, basierend auf der erfassten Intensität ein entsprechendes Sensorsignal zu erzeugen,
wobei das Laserbearbeitungssystem (10) ferner eine Steuereinheit (50) umfasst, die eingerichtet ist, die Sensorsignale von den Photosensoren auszuwerten,
wobei die Steuereinheit (50) vorzugsweise zum Regeln des Laserbearbeitungsprozesses basierend auf den empfangenen Sensorsignalen eingerichtet ist.

14. Laserbearbeitungssystem gemäß einem der Ansprüche 12 oder 13, wobei die Steuereinheit (50) eingerichtet ist, um die einzelnen Sensorsignale der Photosensoren der ersten, zweiten und/oder dritten Photosensoren-Anordnung zu einem kombinierten Sensorsignal zu kombinieren, wobei das Kombinieren vorzugsweise durch Addieren der Sensorsignalwerte der einzelnen Sensorsignale erfolgt; und/oder
wobei die Steuereinheit (50) eingerichtet ist, um zumindest zwei der einzelnen Sensorsignale der Photosensoren der ersten, zweiten und/oder dritten Photosensoren-Anordnung miteinander zu vergleichen, wobei das Vergleichen vorzugsweise durch Quotientenbildung und/oder Subtraktion der Sensorsignalwerte der zwei einzelnen Sensorsignale erfolgt.

15. Laserbearbeitungssystem gemäß Anspruch 14, wobei das kombinierte Sensorsignal die gesamte Intensität oder die mittlere Intensität des gesamten sichtbaren Wellenlängenbereichs repräsentiert, oder
wobei das kombinierte Sensorsignal die Addition der Intensität von Teilmengen der sichtbaren Wellenlängenbereiche repräsentiert.
